# EUROPÄISCHE PATENTSCHRIFT

(11) **EP 4 078 738 B1**
(45) Veröffentlichungstag und Bekanntmachung des Hinweises auf die Patenterteilung: **13.03.2024**
(21) Anmeldenummer: 20833790.7
(22) Anmeldetag: 16.12.2020
(51) Int. Cl.: H01R 13/703, H02H 1/00, H02H 9/02, H01R 13/53

(54) **TECHNIK ZUR VERMEIDUNG EINES LICHTBOGENS BEIM TRENNEN EINER GLEICHSTROMVERBINDUNG UNTER VERWENDUNG EINER VERLÄNGERUNG EINES LEITUNGSVERBUNDS**
TECHNIQUE FOR PREVENTING AN ELECTRIC ARC WHEN DISCONNECTING A DIRECT CURRENT CONNECTION, USING AN EXTENSION OF A LINE ASSEMBLY
TECHNIQUE POUR ÉVITER UN ARC ÉLECTRIQUE LORS DE LA SÉPARATION D'UNE CONNEXION DE COURANT CONTINU AU MOYEN D'UNE RALLONGE D'UNE INTERCONNEXION DE LIGNES

(30) Priorität: 19.12.2019 DE 102019135122
(43) Veröffentlichungstag der Anmeldung: 26.10.2022
(73) Patentinhaber: PHOENIX CONTACT GmbH & Co. KG, 32825 Blomberg (DE)
(72) Erfinder: KLIMPEL, Marc, 32791 Lage (DE)
(74) Vertreter: LifeTech IP Spies & Behrndt Patentanwälte PartG mbB
(86) Internationale Anmeldenummer: PCT/EP2020/086514
(87) Internationale Veröffentlichungsnummer: WO 2021/122812

(56) Entgegenhaltungen:
- EP-A1- 2 742 565
- EP-B1- 2 742 565
- DE-A1-102012 008 614
- DE-A1-102015 224 268
- FR-A1- 3 054 936
- US-A1- 2017 288 348

## Beschreibung

Die Erfindung betrifft eine Technik, insbesondere eine Steckkontaktvorrichtung, zur Vermeidung oder Löschung eines Lichtbogens beim Trennen oder Schließen einer Gleichstromverbindung unter Verwendung einer Verlängerung eines Leitungsverbunds.

Beim Trennen oder Schließen einer Gleichstrom-Verbindung (DC-Verbindung) muss, anders als bei einer Wechselstrom-Anwendung (AC-Anwendung), vermehrt mit einem Lichtbogen gerechnet werden. Besonders bei Steckverbindern stellt dies eine Herausforderung dar. Zum einen führt der Lichtbogen zu Schäden am Steckverbinder, sowohl an Gehäuseteilen als auch an den Kontakten. Zum anderen birgt der Lichtbogen aber auch eine Gefahr für den Bediener.

Es gibt verschiedene Konzepte, den Lichtbogen mit mechanischen Hilfsmitteln zu löschen, wie beispielsweise Opferzonen, oder mittels eines sogenannten Blasmagneten (aufgrund der auf das Plasma des Lichtbogens wirkenden Lorentz-Kraft) oder aufgrund einer Geschwindigkeit der Kontakttrennung.

Eine weitere Alternative ist die elektronische Funkenlöschung. Dabei wird der Lichtbogen mithilfe elektronischer Komponenten unterdrückt. Das Prinzip lässt sich mit einem elektronischen Schalter vergleichen. Wie bei einem mechanischen Schalter wird der Stromkreis unterbrochen. Da jedoch kein physischer Kontakt geöffnet wird, entsteht dabei auch kein Lichtbogen. Der Stromkreis wird mittels elektronischer Komponenten unterbrochen. Halbleiterbauelemente wie Bipolartransistoren mit isolierter Gate-Elektrode (IGBTs), Metall-Oxid-Halbleiter-Feldeffekttransistoren (MOSFETs) oder auch Varistoren verlagern dabei die Schaltleistung auf die elektronischen Baugruppen, und die Kontakte werden somit geschützt. Solche Technologien sind beispielsweise in den Druckschriften EP 2 742 565 B1, US 2018/0006447 A1, DE000020253749A1 und DE10 2007 043 512 A1 beschrieben.

Dabei fließt der Strom im Normalbetrieb entweder permanent über die Elektronik, was kontinuierlich Verlustleistung erzeugt, oder während des Schaltvorganges wird der Stromfluss kurzzeitig über die Elektronik geführt und abgeschaltet, was energietechnisch deutlich besser ist. In diesem Fall ist ein zusätzlicher Hilfskontakt erforderlich, der parallel zu einem der Lastkontakte liegt und den Stromfluss über die Elektronik ermöglicht, wie es in der Druckschrift US 2017/288 348 A1 beschrieben wurde. Diese Varianten, wie beispielsweise in den Druckschriften EP 2 742 565 B1 und US 2018/0006447 A1 beschrieben, können sowohl in ein Steckverbindergehäuse integriert werden, als auch in einer Steckerleiste oder in einem Schaltschrank untergebracht werden. Die zuletzt beschriebene zentrale Platzierung der Elektronik in einer Steckerleiste oder in einem Schaltschrank hat dabei den Vorteil, dass mit einem Modul beliebig viele Steckverbinder betrieben werden können. Wie beispielsweise im Dokument EP 2 742 565 B1 beschrieben, müssen dann in den Zuleitungen zu jedem der Hilfskontakte entsprechende Dioden verbaut werden, damit kein Kurzschluss zwischen den verschiedenen Strängen mehrerer Steckverbinder entsteht und nur der Strom des derzeit schaltenden Stranges (bzw. zu trennenden oder zu verbindenden Steckverbinders) über die Elektronik fließt.

Durch die im Dokument EP 2 742 565 B1 beschriebenen Dioden können zwar mehrere Steckverbinder parallel mit einem einzigen Elektronikmodul versorgt werden, allerdings funktioniert das nur für unidirektionale Netze. Eine Besonderheit von DC-Netzen ist, dass Energieflüsse bidirektional sein können, wie beispielsweise bei Akkumulatoren (Sekundärzellen), die sowohl Quelle, als auch Verbraucher des Gleichstroms sein können. Ebenso können Elektromaschinen als Verbraucher des Gleichstroms arbeiten, aber auch generatorisch beim Bremsen Energie zurückspeisen. Bei einer bidirektionalen Anwendung, beispielsweise dem Wechsel zwischen motorischem und generatorischem Betrieb einer Elektromaschine, funktioniert die beschriebene Diodenschaltung nicht. Hier müsste mit einem deutlichen Mehraufwand eine aufwändigere Schaltung jedes einzelnen Hilfskontakts umgesetzt werden.

Von Nachteil ist im bekannten Stand der Technik, dass die Elektronik pro Strang nur einen Steckverbinder versorgen kann, und zwar nur den ersten Steckverbinder hinter der Elektronik. Oft ist es in Anwendungen aber so, dass mehrere Steckverbinder in Serie geschaltet sind. Beispielsweise kann eine Mehrfachsteckdose in eine Wandsteckdose eingesteckt sein. In die Mehrfachsteckdose können dann weitere Geräte eingesteckt werden, welche teilweise ebenfalls direkt am Gerät mittels eines weiteren Steckers trennbar sind. Beispielsweise kann am Gerät selbst ein sogenannter Kaltgerätestecker verbaut sein. Somit ist es nicht unüblich, dass mehrere Steckverbinder in Reihe geschaltet sind. Durch Verlängerungen eines Leitungsverbunds und Abzweigungen können so eine Vielzahl von seriellen Verbindungen entstehen. Ein Anschluss der von der Löschelektronik aus hinter dem ersten Steckverbinder angeordneten in Reihe geschalteten weiteren Steckverbinder an die Löschelektronik ist im Stand der Technik nicht vorgesehen. Bei einem Trennvorgang eines der weiteren Steckverbinder kann die Löschelektronik somit einen Lichtbogen weder vermeiden noch löschen.

Somit besteht die Aufgabe, eine Technik zur Vermeidung oder Löschung eines Lichtbogens beim Trennen oder Schließen einer Gleichstromverbindung unter Verwendung einer Verlängerung eines Leitungsverbunds oder einer Reihenschaltung von Steckverbindern bereitzustellen, welche sowohl in einem unidirektionalem als auch in einem bidirektionalen Netz betrieben werden kann.

Die Aufgabe wird mit den Merkmalen der unabhängigen Ansprüche gelöst. Zweckmäßige Ausgestaltungen und vorteilhafte Weiterbildungen der Erfindung sind in den abhängigen Ansprüchen angegeben.

Ausführungsbeispiele der Erfindung sind im Folgenden unter teilweiser Bezugnahme auf die Figuren beschrieben.

Gemäß einem ersten Aspekt ist eine Steckkontaktvorrichtung zur Vermeidung oder Löschung eines Lichtbogens beim Trennen oder Schließen einer Gleichstromverbindung unter Verwendung einer Verlängerung eines Leitungsverbunds bereitgestellt. Die Steckkontaktvorrichtung umfasst mindestens zwei Steckverbinder an den Enden einer Verlängerung eines Leitungsverbunds mit jeweils einem Hauptkontakt (HA) und einem Hilfskontakt (HI). Der HA jedes der mindestens zwei Steckverbinder umfasst eine erste Kontakthälfte (HA1) und eine zweite Kontakthälfte (HA2), die lösbar zusammensteckbar sind. Der HA jedes der mindestens zwei Steckverbinder ist dazu ausgebildet, in einem zusammengesteckten Zustand (T₀) des jeweiligen Steckverbinders die HA1 und die HA2 elektrisch leitend zu verbinden. Der HA jedes der mindestens zwei Steckverbinder ist ferner dazu ausgebildet, in einem gelösten Zustand (T₃) des jeweiligen Steckverbinders die HA1 und die HA2 galvanisch zu trennen. Des Weiteren ist der HA jedes der mindestens zwei Steckverbinder dazu ausgebildet, in einem ersten Zwischenzustand (T₁) des jeweiligen Steckverbinders zwischen dem zusammengesteckten Zustand (T₀) und dem gelösten Zustand die HA1 und die HA2 elektrisch leitend zu verbinden. Des Weiteren ist der HA jedes der mindestens zwei Steckverbinder dazu ausgebildet, in einem zweiten Zwischenzustand (T₂) des jeweiligen Steckverbinders zwischen dem ersten Zwischenzustand (T₁) und dem gelösten Zustand die HA1 und die HA2 galvanisch zu trennen. Der Hilfskontakt (HI) jedes der mindestens zwei Steckverbinder umfasst eine erste Kontakthälfte (HI1) und eine zweite Kontakthälfte (HI2), die lösbar zusammensteckbar sind. Der HI jedes der mindestens zwei Steckverbinder ist dazu ausgebildet, im zusammengesteckten Zustand (T₀) des jeweiligen Steckverbinders die HI1 und die HI2 galvanisch zu trennen. Der HA jedes der mindestens zwei Steckverbinder ist ferner dazu ausgebildet, im gelösten Zustand (T₃) des jeweiligen Steckverbinders die HI1 und die HI2 galvanisch zu trennen. Des Weiteren ist der HA jedes der mindestens zwei Steckverbinder dazu ausgebildet, im ersten Zwischenzustand (T₁) des jeweiligen Steckverbinders die HI1 und die HI2 elektrisch leitend zu verbinden. Des Weiteren ist der HA jedes der mindestens zwei Steckverbinder dazu ausgebildet, im zweiten Zwischenzustand (T₂) des jeweiligen Steckverbinders die HI1 und die HI2 elektrisch leitend zu verbinden. Hierbei sind die HA2 und die HI2 des jeweiligen Steckverbinders elektrisch leitend verbunden. Ferner ist die HA2 eines ersten Steckverbinders mit der HA1 eines zweiten Steckverbinders elektrisch leitend verbunden.

Die Steckkontaktvorrichtung umfasst ferner eine elektronische Schalteinheit, deren erster Anschluss mit der HA1 des ersten Steckverbinders und deren zweiter Anschluss mit der HI1 des ersten Steckverbinders und mit der HI1 des zweiten Steckverbinders elektrisch leitend verbunden sind. Die elektronische Schalteinheit ist dazu ausgebildet, in Reaktion auf einen Übergang eines der mindestens zwei Steckverbinder vom zusammengesteckten Zustand (T₀) in den ersten Zwischenzustand (T₁) mindestens eines der Steckverbinder den ersten Anschluss und den zweiten Anschluss elektrisch leitend zu verbinden oder eine Impedanz zwischen dem ersten Anschluss und dem zweiten Anschluss zu verkleinern. Die elektronische Schalteinheit ist ferner dazu ausgebildet, in Reaktion auf einen Übergang eines der mindestens zwei Steckverbinder vom ersten Zwischenzustand (T₁) in den zweiten Zwischenzustand (T₂) mindestens eines der Steckverbinder und/oder vom zweiten Zwischenzustand (T₂) in den gelösten Zustand mindestens eines der Steckverbinder den ersten Anschluss und den zweiten Anschluss elektrisch zu trennen oder eine Impedanz zwischen dem ersten Anschluss und dem zweiten Anschluss zu vergrößern.

In einem Ausführungsbeispiel der Steckkontaktvorrichtung gemäß dem ersten Aspekt kann der HA jedes Steckverbinders im zusammengesteckten Zustand die HA1 und die HA2 elektrisch leitend verbinden, während der HI jedes Steckerbinders im zusammengesteckten Zustand die HI1 und die HI2 galvanisch trennen kann. Im gelösten Zustand können sowohl die HA1 und die HA2 als auch die HI1 und die HI2 jeweils galvanisch getrennt sein. Im ersten Zwischenzustand eines Steckverbinders zwischen T₀ und T₃ können sowohl die HA1 und die HA2 als auch die HI1 und die HI2 jeweils elektrisch leitend verbunden sein. Im zweiten Zwischenzustand des Steckverbinders zwischen T₁ und T₃ können die HA1 und die HA2 galvanisch getrennt sein, während die HA2 und die HI2 elektrisch leitend verbunden sein können.

Gemäß dem ersten Aspekt kann der HA auch als Lastkontakt bezeichnet werden.

Gemäß einem zweiten Aspekt ist eine Steckkontaktvorrichtung zur Vermeidung oder Löschung eines Lichtbogens beim Trennen oder Schließen einer Gleichstromverbindung unter Verwendung einer Verlängerung eines Leitungsverbunds bereitgestellt. Die Steckkontaktvorrichtung umfasst mindestens zwei Steckverbinder an den Enden einer Verlängerung eines Leitungsverbunds mit jeweils einem Hauptkontakt (HA). Der HA jedes Steckverbinders umfasst jeweils eine erste Kontakthälfte, (HA1) und eine zweite Kontakthälfte (HA2), die lösbar zusammensteckbar sind. Die HA1 umfasst einen Lastkontaktabschnitt (LA1), einen Trennabschnitt (TA1) und einen Hilfskontaktabschnitt (HI1). Der HA jedes der mindestens zwei Steckverbinder ist dazu ausgebildet, in einem zusammengesteckten Zustand (T₀) des jeweiligen Steckverbinders den LA1 und die HA2 elektrisch leitend zu verbinden und den HI1 von der HA2 galvanisch zu trennen. Der HA jedes der mindestens zwei Steckverbinder ist ferner dazu ausgebildet, in einem gelösten Zustand (T₃) des jeweiligen Steckverbinders den LA1 und den HI1 von der HA2 galvanisch zu trennen. Des Weiteren ist der HA jedes der mindestens zwei Steckverbinder dazu ausgebildet, in einem ersten Zwischenzustand (T₁') des jeweiligen Steckverbinders zwischen dem zusammengesteckten Zustand (T₀) und dem gelösten Zustand (T₃) den LA1 und die HA2 galvanisch zu trennen und mindestens den TA1 mit einer Kontaktstelle der HA2 in Anlage zu bringen. Ferner ist der HA jedes der mindestens zwei Steckverbinder dazu ausgebildet, in einem zweiten Zwischenzustand (T₂) des jeweiligen Steckverbinders zwischen dem ersten Zwischenzustand (T₁') und dem gelösten Zustand (T₃) den HI1 mit der HA2 elektrisch leitend zu verbinden und den LA1 und die HA2 galvanisch zu trennen. Die HA2 eines ersten Steckverbinders ist hierbei mit der HA1 eines zweiten Steckverbinders elektrisch leitend verbunden.

Die Steckkontaktvorrichtung umfasst ferner eine elektronische Schalteinheit, deren erster Anschluss mit dem LA1 des ersten Steckverbinders und deren zweiter Anschluss mit dem HI1 des ersten Steckverbinders und des zweiten Steckverbinders elektrisch leitend verbunden ist. Die elektronische Schalteinheit ist dazu ausgebildet, in Reaktion auf einen Übergang eines der mindestens zwei Steckverbinder vom zusammengesteckten Zustand (T₀) in den ersten Zwischenzustand (T₁') den ersten Anschluss und den zweiten Anschluss elektrisch leitend zu verbinden oder eine Impedanz zwischen dem ersten Anschluss und dem zweiten Anschluss zu verkleinern. Die elektronische Schalteinheit ist ferner dazu ausgebildet, in Reaktion auf einen Übergang eines der mindestens zwei Steckverbinder vom ersten Zwischenzustand (T₁') in den zweiten Zwischenzustand (T₂) und/oder vom zweiten Zwischenzustand (T₂) in den gelösten Zustand (T₃) den ersten Anschluss und den zweiten Anschluss elektrisch zu trennen oder eine Impedanz zwischen dem ersten Anschluss und dem zweiten Anschluss zu vergrößern.

Ausführungsbeispiele gemäß dem ersten und/oder zweiten Aspekt können eine Steckkontaktvorrichtung ermöglichen, die (beispielsweise bei einer Serienschaltung) auf Dioden an Hilfskontakten verzichtet. Ein Hilfskontakt kann auch als Steuerkontakt bezeichnet werden. Um auf die Diode verzichten zu können, ist vorgesehen, dass die Kontakthälften (HI1 und HI2 gemäß dem ersten Aspekt oder HI1 und HA2 gemäß dem zweiten Aspekt) im zusammengesteckten Zustand galvanisch getrennt sind, beispielsweise mittels eines teilweise isolierten Stiftkontakts (als HI1 mit Trennabschnitt gemäß dem ersten Aspekt oder HA1 mit Abschnitten HI1 und TA1 gemäß dem zweiten Aspekt). Ein solcher Hilfskontakt oder ein einen solchen Hilfskontakt umfassender Steckverbinder kann auch als "X-Leiter" bezeichnet werden. Die Technik zur Vermeidung oder Unterdrückung eines Lichtbogens beim Trennen und/oder Schließen eines Steckverbinders mit Hilfskontakt ("X-Leiter") kann durch die Steckkontaktvorrichtung gemäß jedem der oben genannten (ersten und zweiten) Aspekte an seriell angeschlossene Steckverbinder weitergeleitet werden, indem eine zusätzliche elektrisch leitende Verbindung zwischen den seriellen Hilfskontakten und/oder zu der elektronischen Schalteinheit (die auch als Löschelektronik bezeichnet werden kann), beispielsweise mittels eines zusätzlichen Weiterleitungskontakts (der auch als "Y-Kontakt" bezeichnet werden kann), in den Steckverbinder integriert ist. Der zusätzliche Weiterleitungskontakt ist im Streckverbinder mit dem Hilfskontakt verbunden und somit auch mit der elektronischen Schalteinheit. In den Verlängerungen der Leitungsverbünde, die zu den darauffolgenden Steckverbindern führen, sind entsprechend zusätzliche Leitungen (oder "Adern") vorgesehen, um eine Verbindung zur zentralen elektronischen Schalteinheit zu schaffen.

Eine Verlängerung eines Leitungsverbunds kann ein Verlängerungskabel umfassend. Alternativ oder ergänzend kann eine Verlängerung eines Leitungsverbunds einen Kabelbaum und/oder innerhalb einer Gebäudeinstallation verlaufende und/oder in einer Industrieverteilung an Maschinensträngen angebrachte Leitungen umfassen. Beispielsweise kann der "X-Leiter" innerhalb eines mehradrigen Kabels verlaufen oder (beispielsweise mittels einer Verzweigung hinter einer Hälfte eines oder jedes Steckverbinders) als separate Leitung geführt werden.

Eine Verlängerung eines Leitungsverbunds kann einem Verteilnetz oder einer elektrischen Installation zugeordnet sein.

Im Folgenden werden weitere Ausführungsbeispiele der Steckkontaktvorrichtung gemäß einem der oben genannten Aspekte ausgeführt. Sofern kein expliziter Bezug auf den ersten oder den zweiten Aspekt genommen wird, beziehen sich die Ausführungsbeispiele auf beide oben genannten Aspekte.

Die HA1 jedes der mindestens zwei Steckverbinder kann einen Stiftkontakt und die HA2 jedes der mindestens zwei Steckverbinder kann einen Buchsenkontakt umfassen. Alternativ kann die HA2 jedes der mindestens zwei Steckverbinder einen Stiftkontakt und die HA1 jedes der mindestens zwei Steckverbinder einen Buchsenkontakt umfassen.

Alternativ oder ergänzend kann gemäß dem ersten Aspekt die HI1 jedes der mindestens zwei Steckverbinder einen Stiftkontakt und die HI2 jedes der mindestens zwei Steckverbinder einen Buchsenkontakt umfassen. Weiterhin alternativ oder ergänzend kann gemäß dem ersten Aspekt die HI2 jedes der mindestens zwei Steckverbinder einen Stiftkontakt und die HI1 jedes der mindestens zwei Steckverbinder einen Buchsenkontakt umfassen. Beispielsweise ist der HI so gestaltet, dass im zusammengesteckten Zustand (beispielsweise einem komplett gesteckten Zustand) keine elektrisch leitende Verbindung zwischen HI1 und HI2 (beispielsweise Stiftkontakt und Buchsenkontakt) besteht.

Erst beim Trennen der Gleichstromverbindung (d.h., einem Übergang in Richtung des gelösten Zustands) wird der Stromkreis über die elektronische Schalteinheit (kurz: Elektronik) geschlossen, vorzugsweise beim Übergang in den ersten Zwischenzustand. Dies geschieht vorzugsweise, bevor an dem voreilenden Hauptkontakt (HA) der Lichtbogen entsteht bzw. entstehen würde ohne HI (gemäß dem ersten Aspekt) oder HI-Abschnitt (gemäß dem zweiten Aspekt), beispielsweise beim Übergang in den zweiten Zwischenzustand. Der Lichtbogen löst dann die elektronischen Schalteinheit (kurz: Elektronik) aus, beispielsweise aufgrund eines Spannungsabfalls zwischen dem ersten und zweiten Anschluss, woraufhin der Strom über den HI oder HI-Abschnitt und die Elektronik geleitet wird. Die Elektronik unterbricht dann direkt (beispielsweise nach einer Zeitspanne, die kürzer ist als eine typische Zeitspanne des Übergangs vom zweiten Zwischenzustand zum gelösten Zustand) den Stromkreis und ermöglicht so ein lastfreies Trennen der elektrischen Verbindung (und/oder lastfreies Öffnen des HI oder HI-Abschnitts) ohne Lichtbogen.

Eine beispielhafte Wirkungsweise der Elektronik ist in der Druckschrift EP 2 742 565 B1 beschrieben.

Bei einer Steckkontaktvorrichtung mit mehreren parallel geschalteten Steckverbindern, die auch als Stränge bezeichnet werden, können Ausführungsbeispiele der Steckkontaktvorrichtung die Trennung der einzelnen Stränge voneinander durch die elektrische (vorzugsweise physikalische oder galvanische) Trennung der jeweiligen Hilfskontakte (HI) gemäß dem ersten Aspekt oder Hilfskontaktabschnitte (HI1) gemäß dem zweiten Aspekt der Steckkontaktvorrichtung im zusammengesteckten Zustand bewerkstelligen.

Hierin kann ein Zustand galvanischer Trennung auch als offener Zustand bezeichnet sein. Ein Zustand elektrisch leitender Verbindung kann auch als geschlossener Zustand bezeichnet sein.

Die mindestens zwei Steckverbinder können jeweils zusätzlich zu dem Hauptkontakt (HA) - sowie gemäß dem ersten Aspekt dem Hilfskontakt (HI) - einen Gegenkontakt (GE), der auch als zweiter Hauptkontakt bezeichnet werden kann, und/oder einen Erdungskontakt (PE, auch: "physical earth") umfassen. Der GE und/oder der PE jedes Steckverbinders können jeweils eine erste Kontakthälfte und eine zweite Kontakthälfte umfassen.

Die erste Kontakthälfte GE1 des GE kann einen Stiftkontakt und die zweite Kontakthälfte GE2 des GE kann einen Buchsenkontakt umfassen. Alternativ kann die GE2 einen Stiftkontakt und die GE1 einen Buchsenkontakt umfassen. Alternativ oder ergänzend kann die erste Kontakthälfte PE1 des PE einen Stiftkontakt und die zweite Kontakthälfte PE2 des PE einen Buchsenkontakt umfassen, oder die PE2 kann einen Stiftkontakt und die PE1 einen Buchsenkontakt umfassen.

Der Hauptkontakt (HA) des ersten Steckverbinders kann mit dem Pluspol einer Gleichstromquelle verbunden oder verbindbar sein. Der Gegenkontakt (GE) des ersten Steckverbinders kann mit dem Minuspol einer Gleichstromquelle verbunden oder verbindbar sein. Der GE und/oder der PE können im zusammengesteckten Zustand (Ta), im ersten Zwischenzustand (T₁; T₁') und im zweiten Zwischenzustand

(T₂) elektrisch leitend verbunden und im gelösten Zustand (T₃) galvanisch getrennt sein.

Die elektronische Schalteinheit kann mindestens einen Halbleiterschalter umfassen. Die elektronische Schalteinheit kann mit dem HI (gemäß dem ersten Aspekt) oder dem HI1 (gemäß dem zweiten Aspekt) der mindestens zwei Steckverbinder in Reihe geschaltet sein. Der HI bzw. der HI1 jedes Steckverbinders kann mittels der elektronischen Schalteinheit wahlweise parallel zu dem HA des jeweiligen Steckverbinders geschaltet sein. Die elektronische Schalteinheit kann auch als Löschelektronik bezeichnet werden.

Die elektronische Schalteinheit kann ferner dazu ausgebildet sein, in Reaktion auf einen Übergang vom gelösten Zustand in den zweiten Zwischenzustand (T₂) und/oder vom zweiten Zwischenzustand (T₂) in den ersten Zwischenzustand (T₁; T₁') eines der mindestens zwei Steckerbinder den ersten Anschluss und den zweiten Anschluss elektrisch leitend zu verbinden oder eine Impedanz zwischen dem ersten Anschluss und dem zweiten Anschluss zu verkleinern, und in Reaktion auf einen Übergang vom ersten Zwischenzustand (T₁; T₁') in den zusammengesteckten Zustand (T₀) eines der mindestens zwei Steckerbinder den ersten Anschluss und den zweiten Anschluss elektrisch zu trennen oder eine Impedanz zwischen dem ersten Anschluss und dem zweiten Anschluss zu vergrößern.

Die elektronische Schalteinheit kann dazu ausgebildet sein, den ersten Anschluss und den zweiten Anschluss für einen bidirektionalen Stromfluss oder für beide Stromrichtungen elektrisch leitend zu verbinden. Ein bidirektionaler Stromfluss kann durch einen Gleichrichter gewährleistet werden.

Ein Pol einer Gleichstromquelle der Gleichstromverbindung, vorzugsweise ein Pluspol der Gleichstromquelle, kann mit der HA1 gemäß dem ersten Aspekt (bzw. dem LA1 der HA1 gemäß dem zweiten Aspekt) des Hauptkontakts des ersten Steckverbinders und/oder dem ersten Anschluss der elektronischen Schalteinheit elektrisch leitend verbunden oder verbindbar sein. Ein Pol eines elektrischen Verbrauchers, vorzugsweise ein Pluspol des Verbrauchers, kann mit der HA2 des Hauptkontakts des zweiten Steckverbinders und/oder der HI2 des Hilfskontakts (gemäß dem ersten Aspekt) des zweiten Steckverbinders elektrisch leitend verbunden oder verbindbar sein.

Alternativ oder ergänzend kann ein Pol einer Gleichstromquelle der Gleichstromverbindung, vorzugsweise ein Pluspol der Gleichstromquelle, mit der HA2 des Hauptkontakts des zweiten Steckverbinders und/oder der HI2 des Hilfskontakts (gemäß dem ersten Aspekt) des zweiten Steckverbinders elektrisch leitend verbunden oder verbindbar sein. Din Pol eines elektrischen Verbrauchers, vorzugsweise ein Pluspol des Verbrauchers, kann mit der HA1 gemäß dem ersten Aspekt (bzw. dem LA1 der HA1 gemäß dem zweiten Aspekt) des Hauptkontakts des ersten Steckverbinders und/oder dem ersten Anschluss der elektronischen Schalteinheit elektrisch leitend verbunden oder verbindbar sein.

Beispielsweise kann die Gleichstromquelle einen wiederaufladbaren elektrischen Energiespeicher (vorzugsweise Sekundärzellen) umfassen und der elektrische Verbraucher kann eine Elektromaschine (E-Maschine) umfassen. Die E-Maschine kann (vorzugsweise temporär) generatorisch betrieben werden, wobei sich die Stromrichtung des Gleichstroms (vorzugsweise zu einer Rekuperation) durch die Steckkontaktvorrichtung umkehrt.

Mindestens der erste Steckverbinder kann einen Weiterleitungskontakt (WL) mit einer ersten Kontakthälfte (WL1) und einer zweiten Kontakthälfte (WL2) umfassen. Die WL1 des WL des ersten Steckverbinders kann mit dem ersten Anschluss der elektronischen Schalteinheit und/oder der bzw. dem HI1 (gemäß dem ersten bzw. zweiten Aspekt) elektrisch verbunden sein. Die WL2 des WL des ersten Steckverbinders kann mit der bzw. dem HI1 (gemäß dem ersten bzw. zweiten Aspekt) des zweiten Steckverbinders elektrisch leitend verbunden sein. Optional kann auch der zweite Steckverbinder einen Weiterleitungskontakt (WL) mit einer ersten Kontakthälfte (WL1) und einer zweiten Kontakthälfte (WL2) umfassen. Die WL1 des WL des zweiten Steckverbinders kann elektrisch leitend mit der bzw. dem HI1 (gemäß dem ersten bzw. zweiten Aspekt) des zweiten Steckverbinders und/oder der WL2 des ersten Steckverbinders elektrisch leitend verbunden sein.

Die WL1 des ersten oder jedes der mindestens zwei Steckverbinder kann einen Stiftkontakt und die WL2 des ersten oder jedes der mindestens zwei Steckverbinder einen Buchsenkontakt umfassen. Alternativ kann die WL2 des ersten oder jedes der mindestens zwei Steckverbinder einen Stiftkontakt und die WL1 des ersten oder jedes der mindestens zwei Steckverbinder einen Buchsenkontakt umfassen.

Durch den WL des ersten Steckverbinders kann beim Trennen oder Schließen des zweiten oder eines weiteren Steckverbinders die elektronische Schalteinheit aktiviert werden, indem die elektrisch leitende Verbindung des HI (gemäß dem ersten Aspekt) oder zwischen HA2 und HI1 (gemäß dem zweiten Aspekt) des zweiten oder weiteren Steckverbinders über den WL mit der elektronischen Schalteinheit verbunden wird. Durch die elektrisch leitende Verbindung des HI oder HI1 kann, insbesondere wenn ein von der elektronischen Schalteinheit entfernter in Reihe geschalteter Steckverbinder getrennt wird, mittels einer Änderung einer Spannungsdifferenz zwischen dem ersten und dem zweiten Anschluss der elektronischen Schalteinheit eine Änderung der Impedanz der elektronischen Schalteinheit bewirkt werden.

Der WL kann als Signalkontakt, Kommunikationskontakt oder Datenkontakt ausgebildet sein. Alternativ oder ergänzend kann der WL einen Koaxialkontakt mit einem weiteren Kontakt, beispielsweise einem Signalkontakt, umfassen.

Ein Außenprofil des Stiftkontakts und/oder ein Innenprofil des Buchsenkontakts des HA jedes der mindestens zwei Steckverbinder und/oder ein Außenprofil des Stiftkontakts und/oder ein Innenprofil des Buchsenkontakts des HI (gemäß dem ersten Aspekt) des jeweiligen Steckverbinders können einen runden, ovalen oder mehreckigen Querschnitt aufweisen. Der HA und/oder der HI (gemäß dem ersten Aspekt) und/oder der WL und/oder der GE und/oder der PE des jeweiligen Steckverbinders können hermaphroditisch sein. Beispielsweise können die ersten Kontakthälften HA1 und GE1 als Buchsenkontakt und die erste Kontakthälfte PE1 als Stiftkontakt ausgebildet sein.

Die elektronische Schalteinheit kann mindestens einen Halbleiterschalter umfassen, der dazu ausgebildet ist, bei Anliegen einer elektrischen Spannung zwischen dem ersten Anschluss und dem zweiten Anschluss die Impedanz zwischen dem ersten Anschluss und dem zweiten Anschluss zu verkleinern oder den ersten Anschluss und den zweiten Anschluss elektrisch leitend zu verbinden.

Die elektronische Schalteinheit kann zum bidirektionalen Stromfluss zwischen dem ersten Anschluss und dem zweiten Anschluss ausgebildet sein. Vorzugsweise kann die elektronische Schalteinheit zum bidirektionalen Stromfluss eine Gleichrichterbrücke umfassen. Die elektronische Schalteinheit kann eine Gleichrichterbrücke umfassen, die mit dem mindestens einen Halbleiterschalter verkettet ist. Beispielsweise ist mit einem oder mehreren Halbleiterschaltern, welche den ersten Anschluss und den zweiten Anschluss wahlweise elektrisch leitend verbinden und trennen bzw. die Impedanz zwischen dem ersten Anschluss und dem zweiten Anschluss wahlweise vergrößern und verkleinern, eine Gleichrichterbrücke verkettet. Zwei gegenüberliegende Anschlüsse der Gleichrichterbrücke können den ersten Anschluss und den zweiten Anschluss der elektronischen Schalteinheit umfassen. Zwei weitere gegenüberliegende Anschlüsse der Gleichrichterbrücke können über einen Halbleiterschalter und/oder ein RC-Glied und/oder einen Kondensator und/oder einen Varistor und/oder einen Thermistor miteinander verbunden oder verbindbar sein.

Die elektronische Schalteinheit kann zwei in zueinander entgegengesetzter Richtung miteinander in Reihe geschaltete Halbleiterschalter umfassen, denen jeweils in Sperrichtung eine Diode parallel geschaltet ist. Die jeweils parallel geschaltete Diode kann in Sperrrichtung des Halbleiterschalters als Bypass wirken. Optional kann die elektronische Schalteinheit ferner einen Trigger-Schaltkreis umfassen, der dazu ausgebildet ist, bei Anliegen der elektrischen Spannung zwischen dem ersten Anschluss und dem zweiten Anschluss ein Schließen eines Halbleiterschalters zu bewirken. Weiterhin optional kann der Trigger-Schaltkreis die Gleichrichterbrücke umfassen.

Alternativ oder ergänzend kann die elektronische Schalteinheit einen Metall-Oxid-Halbleiter-Feldeffekttransistor (MOSFET) und/oder einen Bipolartransistor mit isolierter Gate-Elektrode (IGBT) und/oder ein RC-Glied mit einem Kondensator und einem Varistor und/oder Thermistor umfassen.

Die Steckkontaktvorrichtung kann mindestens zwei erste Steckverbinder und zwei zweite Steckverbinder mit jeweils einem HA (und gemäß dem ersten Aspekt jeweils einem HI) und eine elektronische Schalteinheit umfassen. Der erste Anschluss der elektronischen Schalteinheit kann mit der HA1 (gemäß dem ersten Aspekt) bzw. mit dem LA1 der HA1 (gemäß dem zweiten Aspekt) des HA jedes ersten Steckverbinders elektrisch leitend verbunden sein. Der zweite Anschluss der elektronischen Schalteinheit kann mit der bzw. dem HI1 (gemäß dem ersten bzw. zweiten Aspekt) des jeweiligen ersten Steckverbinders elektrisch leitend verbunden sein. Die jeweiligen ersten Steckverbinderhälften der mindestens zwei ersten Steckverbinder können an dieselbe Gleichstromquelle angeschlossen sein und/oder parallelgeschaltet sein.

Die mindestens zwei Steckverbinder können ferner jeweils einen Gegenpolkontakt (GE) mit einer ersten Kontakthälfte (GE1) und einer zweite Kontakthälfte (GE2), umfassen für einen Gegenpol der Gleichstromverbindung bezüglich des jeweiligen HA. Vorzugsweise kann der GE jedes Steckverbinders dazu ausgebildet sein, im zusammengesteckten Zustand (T₀) des jeweiligen Steckverbinders, im ersten Zwischenzustand (T₁; T₁') des jeweiligen Steckverbinders und im zweiten Zwischenzustand (T₂) des jeweiligen Steckverbinders die GE1 und die GE2 elektrisch leitend zu verbinden. Die Kontakthälften GE1 oder GE2 können länger sein als die Kontakthälften HA1 (gemäß dem ersten Aspekt) bzw. LA1 (gemäß dem zweiten Aspekt) oder HA2 des HA. Insbesondere kann die Kontakthälfte GE1 oder GE2 des GE dieselbe Länge haben wie eine Kontakthälfte HI1 oder HI2 des HI gemäß dem ersten Aspekt bzw. wie der HI1 des HA1 gemäß dem zweiten Aspekt.

Die mindestens zwei Steckverbinder können ferner jeweils einen Erdungskontakt (PE) mit einer ersten Kontakthälfte (PE1) und einer zweiten Kontakthälfte (PE2), umfassen. Der PE kann dazu ausgebildet sein, im zusammengesteckten Zustand (T₀) des jeweiligen Steckverbinders, im ersten Zwischenzustand (T₁; T₁') des jeweiligen Steckverbinders und im zweiten Zwischenzustand (T₂) des jeweiligen Steckverbinders die PE1 und die PE2 elektrisch leitend zu verbinden. Die Kontakthälften PE1 oder PE2 können länger sein als die Kontakthälften HA1 (gemäß dem ersten Aspekt) bzw. LA1 (gemäß dem zweiten Aspekt) oder HA2 des HA und/oder als die Kontakthälften HI1 oder HI2 des HI (gemäß dem ersten Aspekt) bzw. als der HI1 des HA1 (gemäß dem zweiten Aspekt) und/oder als die Kontakthälften GE1 und GE2 des GE.

Jeder der mindestens zwei Steckverbinder kann jeweils eine erste Steckverbinderhälfte und eine zweite Steckverbinderhälfte umfassen. Die erste Steckverbinderhälfte kann die HA1 des HA (und gemäß dem ersten Aspekt die HI1 des HI) umfassen. Die erste Steckverbinderhälfte kann ferner die WL1 des WL und/oder die GE1 des GE und/oder die PE1 des PE umfassen. Die zweite Steckverbinderhälfte kann die HA2 des HA (und gemäß dem ersten Aspekt die HI2 des HI) umfassen. Die zweite Steckverbinderhälfte kann ferner die GE2 des GE, die WL2 des WL und/oder die PE2 des PE umfassen. Die erste Steckverbinderhälfte kann auch als Steckdose bezeichnet werden. Die zweite Steckverbinderhälfte kann auch als Netzstecker bezeichnet werden.

Die erste Steckverbinderhälfte und die zweite Steckverbinderhälfte des jeweiligen Steckverbinders können im zusammengesteckten Zustand mechanisch verbunden sein. Die erste Steckverbinderhälfte und die zweite Steckverbinderhälfte des jeweiligen Steckverbinders können im gelösten Zustand räumlich getrennt sein.

Jede Steckverbinderhälfte kann ein Gehäuse umfassen.

Der HA (und gemäß dem ersten Aspekt der HI) und optional der WL und/oder GE und/oder PE jedes Steckverbinders können jeweils eine Längsachse aufweisen. Die HA1 und die HA2 (und gemäß dem ersten Aspekt die HI1 und die HI2) und optional die WL1 und dWL2 und/oder die GE1 und GE2 und/oder PE1 und PE2 eines Steckverbinders können jeweils entlang ihrer Längsachse zusammensteckbar und lösbar sein. Die Längsachse des HAs (und die Längsachse des HI gemäß dem ersten Aspekt) und optional die Längsachse des WL und/oder GE und/oder PE können zueinander parallel sein. Alternativ können die HA1 und die HA2 (und gemäß dem ersten Aspekt die HI1 und die HI2) und optional die WL1 und die WL2 und/oder die GE1 und die GE2 und/oder die PE1 und PE2 jeweils entlang einer Querachse, die quer oder senkrecht zur Längsachse ist, zusammensteckbar und lösbar sein.

Eine Ausdehnung der (lastenseitigen) HI2 oder der (gleichstromquellenseitigen) HI1 des HI jedes der mindestens zwei Steckverbinder gemäß dem ersten Aspekt kann bezüglich einer Kontaktstelle der (gleichstromquellenseitigen) HI1 bzw. (lastenseitigen) HI2, die der (lastenseitigen) HI2 oder der (gleichstromquellenseitigen) HI1 des jeweiligen HI zugeordnet ist, länger sein als eine Ausdehnung der (lastenseitigen) HA2 oder der (gleichstromquellenseitigen) HA1 des HA bezüglich einer Kontaktstelle der (gleichstromquellenseitigen) HA1 bzw. (lastenseitigen) HA2, die der (lastenseitigen) HA2 oder der (gleichstromquellenseitigen) HA1 des jeweiligen HA zugeordnet ist. Die jeweilige Ausdehnung kann entlang der Längsachse in der Richtung des Zusammensteckens im zusammengesteckten Zustand bestimmt sein. Eine lastenseitige Kontakthälfte kann durch die elektrisch leitende Verbindung von HA2 und HI2 bestimmt sein. Eine gleichstromquellenseitige Kontakthälfte kann durch die Reihenschaltung von HI1 (im Falle eines zweiten Steckverbinders über eine Reihenschaltung mit dem WL des zugehörigen ersten Steckverbinders) mit der elektronischen Schalteinheit und deren elektrisch leitende Verbindung mit der HA1 bestimmt sein. Beispielsweise können die lastenseitigen HA2 und HI2 jeweils Stiftkontakte umfassen. Die Ausdehnung der Stiftkontakte kann von der Kontaktstelle des jeweiligen Buchsenkontakts HA1 bzw. HI1 (beispielsweise als Nullpunkt) aus eine Länge des jeweiligen Stiftkontakts in (gleichstromseitiger) Steckrichtung im zusammengesteckten Zustand umfassen. Der Stiftkontakt des HA kann kürzer sein als der Stiftkontakt des HI.

Die HI2 oder die HI1 des HI des mindestens einen Steckverbinders gemäß dem ersten Aspekt kann einen Trennabschnitt umfassen. Der Trennabschnitt kann im zusammengesteckten Zustand (T₀) des jeweiligen Steckverbinders eine galvanische Trennung von der Kontaktstelle der HI1 oder der HI2, die der HI2 oder der HI1 des HI zugeordnet ist, bewirken.

Eine Ausdehnung des Trennabschnitts der HI2 oder der HI1 gemäß dem ersten Aspekt kann eine entlang einer Teilausdehnung der HI2 bzw. HI1 umlaufende Isolierung umfassen. Die Teilausdehnung der HI2 bzw. HI1 kann kürzer sein als die Ausdehnung der HA2 oder der HA1 des HA bezüglich einer Kontaktstelle der HA1 bzw. HA2, die der HA2 oder der HA1 des jeweiligen HA zugeordnet ist. Die jeweilige Ausdehnung entlang der Längsachse kann in der Richtung des Zusammensteckens im zusammengesteckten Zustand bestimmt sein. Beispielsweise kann die HI2 einen Stiftkontakt mit einer umlaufenden Isolierung als Trennabschnitt umfassen. Der Trennabschnitt kann eine äußere (aus Sicht der Zusammensteck-Richtung) Teillänge des Stiftkontakts umfassen.

Der LA1 und der HI1 der HA1 gemäß dem zweiten Aspekt können koaxial entlang der Längsachse angeordnet sein. Der HI1 kann entlang der Längsachse in Richtung des Zusammensteckens vor dem TA1 und der TA1 entlang der Längsachse in Richtung des Zusammensteckens vor dem LA1 der HA1 angeordnet sein.

Der TA1 der HA1 gemäß dem zweiten Aspekt kann eine umlaufende Isolierung umfassen.

Gemäß jedem der vorstehenden Aspekte kann die HA1 oder die HA2 des jeweiligen HA entlang der Längsachse nur eine Kontaktstelle aufweisen. Alternativ oder ergänzend kann die HI1 oder die HI2 des jeweiligen HI entlang der Längsachse nur eine Kontaktstelle aufweisen.

Weitere Merkmale und Vorteile der Erfindung werden im Folgenden unter Bezugnahme auf die beigefügten Zeichnungen beschrieben. Es zeigen:
- Fig. 1A und 1B: zwei Ausführungsbeispiele einer Steckkontaktvorrichtung mit einem Hauptkontakt, einem, Hilfskontakt, einer elektronischen Schalteinheit und einer Verlängerung eines Leitungsverbunds gemäß dem ersten Aspekt;
- Fig. 2A und 2B: zwei Ausführungsbeispiele einer Steckkontaktvorrichtung mit einem Hauptkontakt, dessen erste Kontakthälfte einen Lastkontaktabschnitt und einen Hilfskontaktabschnitt umfasst, und mit einer elektronischen Schalteinheit und einer Verlängerung eines Leitungsverbunds gemäß dem zweiten Aspekt;
- Fig. 3A und 3B: einen beispielhaften Trennvorgang eines Ausführungsbeispiels der Steckkontaktvorrichtung aus Fig. 1A und 1B;
- Fig. 4A bis 4C: einen beispielhaften Trennvorgang eines Ausführungsbeispiels der Steckkontaktvorrichtung aus Fig. 2A und 2B;
- Fig. 5: ein drittes Ausführungsbeispiel einer Steckkontaktvorrichtung als Mehrfachstecksystem in Erweiterung der Steckkontaktvorrichtung aus Fig. 1B; und
- Fig. 6A und 6B: zwei Ausführungsbeispiele einer bidirektionalen elektronischen Schalteinheit.

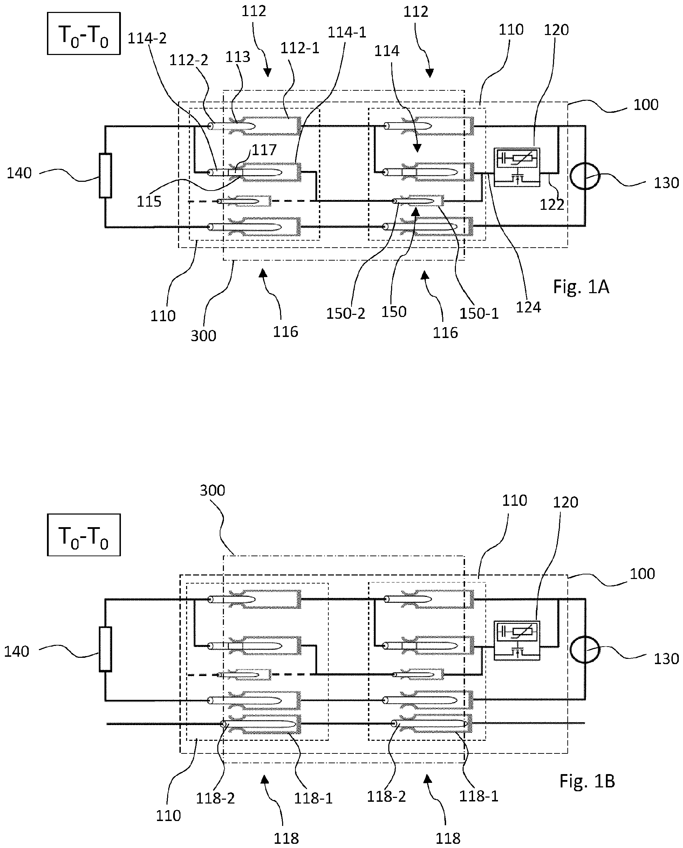

Fig. 1A und 1B zeigen zwei Ausführungsbeispiele einer allgemein mit Bezugszeichen 100 bezeichneten Steckkontaktvorrichtung zur Vermeidung oder Löschung eines Lichtbogens beim Trennen oder Schließen einer Gleichstromverbindung unter Verwendung einer Verlängerung eines Leitungsverbunds gemäß dem ersten Aspekt. Die Steckkontaktvorrichtung 100 umfasst zwei allgemein mit Bezugszeichen 110 bezeichnete Steckverbinder mit jeweils einem Hauptkontakt (HA) 112 mit einer als Buchsenkontakt ausgebildeten ersten Kontakthälfte (HA1) 112-1 und einer als Stiftkontakt ausgebildeten zweiten Kontakthälfte (HA2) 112-2. Ferner umfasst jeder Steckverbinder 110 einen Hilfskontakt (HI) 114 mit einer als Buchsenkontakt ausgebildeten ersten Kontakthälfte (H 11) 114-1 und einer als Stiftkontakt ausgebildeten zweiten Kontakthälfte (HI2) 114-2. Die HA2 112-2 und HI2 114-2 jedes Steckverbinders sind elektrisch leitend verbunden. Die HA1 112-1 des ersten Steckverbinders 110 (rechts in der Figur) ist mit einem Pol, vorzugsweise dem Pluspol, einer Gleichstromquelle 130 elektrisch leitend verbunden oder verbindbar.

Die HA2 112-2 des zweiten Steckverbinders 110 (links in der Figur) ist mit einer Last 140 verbunden oder verbindbar. Ferner sind die HA2 112-2 und HI2 114-2 des ersten Steckverbinders 110 mit der HA1 112-1 des zweiten Steckverbinders 110 mittels einer Verlängerung 300 eines Leitungsverbunds, die hier beispielhaft als Verlängerungskabel ausgebildet ist, elektrisch leitend verbunden. Das Verlängerungskabel 300 umfasst die zweite Steckverbinderhälfte 110-2 des ersten Steckverbinders 110, die erste Steckverbinderhälfte 110-1 des zweiten Steckverbinders 110 sowie deren elektrisch leitende Verbindungen.

Der erste Steckverbinder 110 (und optional der zweite Steckverbinder 110) umfasst einen Weiterleitungskontakt WL 150 mit einer ersten Kontakthälfte WL1 150-1 und einer zweiten Kontakthälfte WL2 150-2. Die erste Kontakthälfte WL1 150-1 des ersten (und optional des zweiten) Steckverbinders 110 ist elektrisch leitend mit der HI1 114-1 desselben Steckverbinders 110 verbunden. Die WL2 150-2 des ersten Steckverbinders 110 ist mit der HI1 114-1 (und optional der WL1 150-1) des zweiten Steckverbinders 110 mittels des Verlängerungskabels 300 elektrisch leitend verbunden. Ein Gegenpolkontakt 116 jedes Steckverbinders 110 umfasst eine erste Kontakthälfte GE1 116-1 und eine zweite Kontakthälfte GE2 116-2, wobei die GE2 116-2 des ersten Steckverbinders 110 mit der GE1 116-1 des zweiten Steckverbinders 110 mittels des Verlängerungskabels 300 elektrisch leitend verbunden ist. Ferner ist die GE1 116-1 des ersten Steckverbinders 110 mit dem Gegenpol, vorzugsweise dem Minuspol, einer Gleichstromquelle 130 und die GE2 116-2 des zweiten Steckverbinders 110 mit einer Last 140 verbunden oder verbindbar.

Eine elektronische Schalteinheit 120 ist über einen ersten Anschluss 122 parallel zum Buchsenkontakt (HA1) 112-1 des ersten Steckverbinders 110 geschaltet. Die HI1 114-1 und WL1 150-1 des ersten Steckverbinders 110 sind über einen zweiten Anschluss 124 in Reihe geschaltet mit der elektronischen Schalteinheit 120. Die Steckkontaktvorrichtung 100 ist in Fig. 1A und 1B im zusammengesteckten Zustand T₀ gezeigt, in dem die Stiftkontakte HA2 112-2, WL2 150-2 und GE2 116-2 jedes Steckverbinders 110 mit dem jeweiligen Buchsenkontakt HA1 112-1, WL1 150-1 und GE1 116-1 des jeweiligen Steckverbinders 110 über die jeweilige Kontaktstelle (113 für den HA und 115 für den HI) elektrisch leitend verbunden ist. Der Stiftkontakt (HI2) 114-2 jedes Steckverbinders 110 ist im in Fig. 1A und 1B gezeigten zusammengesteckten Zustand T₀ durch einen Trennabschnitt 117, der eine umlaufende Isolierung umfasst, von der Kontaktstelle 115 des jeweiligen Buchsenkontakts (HI1) 114-1 galvanisch getrennt.

Die elektronische Schalteinheit 120 in Fig. 1A und 1B umfasst ein RC-Glied ("Resistor Capacitor"). Das RC-Glied kann als Metall-Oxid-Halbleiter-Feldeffekttransistor (MOSFET) oder Bipolartransistor mit isolierter Gate-Elektrode (IGBT) ausgebildet sein. Alternativ oder ergänzend können auch mehrere RC-Glieder, beispielsweise ein IGBT und ein MOSFET, in Reihe geschaltet sein. Ferner umfasst die elektronische Schalteinheit 120 optional eine Gleichrichterbrücke (nicht gezeigt). Durch eine Umkehr der Stromrichtung kann beispielsweise Bremsenergie einer generatorisch betriebenen Elektromaschine rekuperiert werden.

Das in Fig. 1B gezeigte Ausführungsbeispiel umfasst ferner für jeden Steckverbinder 110 einen Erdungskontakt PE 118 mit einer als Buchsenkontakt ausgebildeten ersten Kontakthälfte PE1 118-1 und einer als Stiftkontakt ausgebildeten zweiten Kontakthälfte PE2 118-2. Die PE2 118-2 des ersten Steckverbinders 110 ist mit der PE1 118-1 des zweiten Steckverbinders 110 mittels des Verlängerungskabels 300 elektrisch leitend verbunden.

Fig. 1A und 1B zeigen die Steckkontaktvorrichtung 100 jeweils im zusammengesteckten Zustand T₀. Die Kontakte HA 112, WL 150 (zumindest des ersten Steckverbinders), GE 116 und optional PE 118 jedes Steckverbinders sind elektrisch leitend verbunden. Der Kontakt HI 114 jedes Steckverbinders ist mittels des Trennabschnitts 117, beispielsweise einer umlaufenden Isolierung, galvanisch getrennt.

Die Ausführungsbeispiele der Fig. 1A und 1B zeigen, wie der zusätzliche Weiterleitungskontakt 150 in einem Steckverbinder integriert werden muss, um die Weitergabe des Hilfskontakts ("X-Leiter") 114 zu ermöglichen. Im Steckverbinder 110 wird mit einem "Y-Abgriff" vom Hilfskontakt 114 zum zusätzlichen Weiterleitungskontakt 150 eine Verbindung erstellt. In den Ausführungsbeispielen der Fig. 1A und 1B umfasst der "Y-Abgriff" Buchsenkontakte 114-1, 150-1 des Hilfskontakts 114 und des Weiterleitungskontakts 150-1 des ersten Steckverbinders 110, die elektrisch verbunden sind mit der elektronischen Schalteinheit 120. Der Weiterleitungskontakt 150 kann, wie in Fig. 1A und 1B dargestellt, kleiner (beispielweise bezüglich eines Querschnitts und/oder einer Längsachse der Stiftkontakte) sein als der Hauptkontakt 112 und/oder der Gegenkontakt 116 desselben Steckverbinders 110. Wird nun ein Verlängerungskabel 300 oder eine Vorrichtung in den Steckverbinder 110 eingesteckt, wird der Weiterleitungskontakt 150 über den Stiftkontakt und die zusätzliche Leitung ("Ader") an den Hilfskontakt 114 des nachfolgenden (beispielsweise aus der Richtung Gleichstromquelle 130) Steckverbinders 110 weitergeleitet. Über einen entsprechenden "Y-Abgriff" in diesem nachfolgenden Steckverbinder 110 kann optional der Weiterleitungskontakt 150 ebenfalls wieder an einen nachfolgenden Steckverbinder 110 weitergegeben werden (gestrichelt dargestellt). Da die Hilfskontakte 114 der seriell angeordneten Steckverbinder 110 vollständig gesteckt sind, befinden sich diese in der isolierten Position (d.h. der Trennabschnitt 117 liegt an der Kontaktstelle 115 des Hilfskontakts 114 an) und sind somit sowohl von der elektronischen Steuereinheit 120, als auch von anderen (beispielsweise seriell geschalteten) Steckverbindern 110 elektrisch getrennt. Wird einer der Steckverbinder 110 getrennt, wird der entsprechende Hilfskontakt 114 in die leitende Position überführt und in Verbindung mit der elektronischen Steuereinheit 120 gebracht. Die elektronische Steuereinheit 120 verlöscht dann den Lichtbogen beim Trennvorgang eines beliebigen in Serie geschalteten Steckverbinders 110. Eine Besonderheit des Weiterleitungskontaktes ist darüber hinaus, dass er als Signal-, Kommunikations- oder Datenkontakt genutzt werden kann, um beispielsweise eine Kommunikation zwischen Gleichstromquelle 130 und Last 140 zu ermöglichen oder andere Informationen über Zustände zu vermitteln.

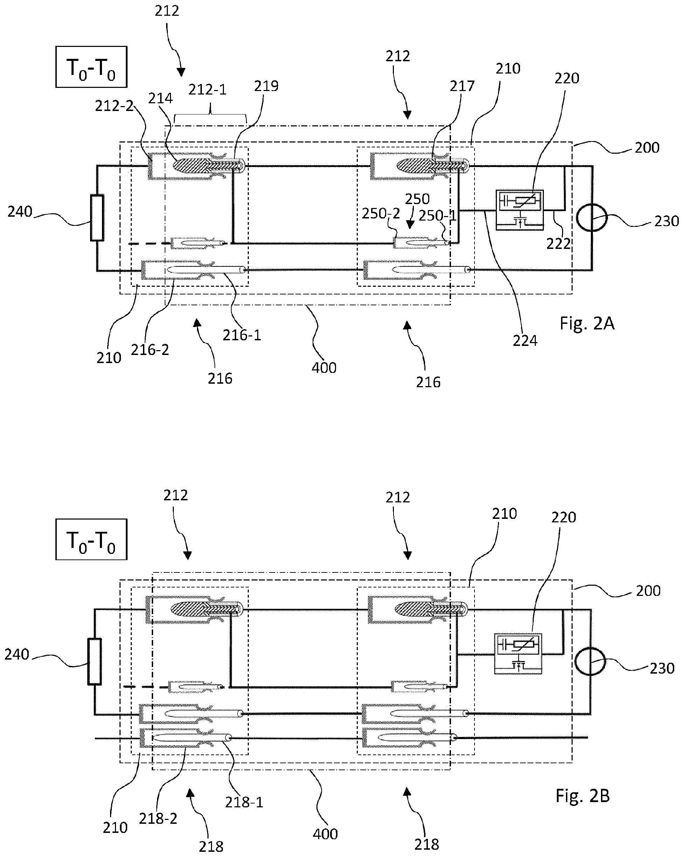

Die Weitergabe des Hilfskontakts mittels einem zusätzlichen Weiterleitungskontakt funktioniert sowohl bei den Kontakten wie in den Ausführungsbeispielen der Fig. 1A und 1B dargestellt, als auch bei der Verwendung von Koaxialkontakten wie in den Ausführungsbeispielen der Fig. 2A und 2B dargestellt. Ferner kann der Weiterleitungskontakt zur Weitergabe des Hilfskontakts ebenfalls mittels Koaxialkontakt mit einem anderen Kontakt vereint sein.

Fig. 2A und 2B zeigen zwei Ausführungsbeispiele einer allgemein mit Bezugszeichen 100 bezeichneten Steckkontaktvorrichtung zur Vermeidung oder Löschung eines Lichtbogens beim Trennen oder Schließen einer Gleichstromverbindung unter Verwendung einer Verlängerung eines Leitungsverbunds gemäß dem zweiten Aspekt. Die Steckkontaktvorrichtung 200 umfasst zwei allgemein mit Bezugszeichen 210 bezeichneten Steckverbinder mit jeweils einem Hauptkontakt (HA) 212 mit einer als koaxialer Stiftkontakt ausgebildeten ersten Kontakthälfte (HA1) 212-1 und einer als Buchsenkontakt ausgebildeten zweiten Kontakthälfte (HA2) 212-2. Die HA1 212-1 jedes Steckverbinders 210 umfasst einen Lastkontaktabschnitt (LA1) 219 und einen Hilfskontaktabschnitt (HI1) 214 sowie einen als umlaufende Isolierung ausgebildeten Trennabschnitt (TA1) 217. In Zusammensteckrichtung entlang einer Längsachse des HA 212 ist die HA1 212-1 des jeweiligen Steckverbinders 210 koaxial ausgebildet mit dem HI1 214 vor dem umlaufenden TA1 217, der wiederum vor dem (nach außen gerichteten) LA1 219 angeordnet ist. Der LA1 219 und der HI1 214 jedes Steckverbinders 210 sind auf einer Außenfläche des jeweiligen HA1 212-1 durch die umlaufende Isolierung des zugeordneten TA1 217 galvanisch getrennt. Ferner sind der LA1 219 und der HI1 214 eines jeden Steckverbinders 210 axial durch dieselbe oder eine weitere Isolierung getrennt. Der LA 219 des HA 212 des ersten Steckverbinders 210 ist mit einem Pol, vorzugsweise dem Pluspol der Gleichstromquelle 230, elektrisch leitend verbunden oder verbindbar. Über die Kontaktstelle 213 des HA2 212-2 ist der LA 219 des zweiten Steckverbinders 210 mit dem zugeordneten Pol der Last 240 verbunden oder verbindbar.

Eine elektronische Schalteinheit 220 ist über einen ersten Anschluss 222 parallel zum LA1 219 des ersten Steckverbinders 210 geschaltet. Der HI 214 des ersten Steckverbinders ist über einen zweiten Anschluss 224 in Reihe geschaltet mit der elektronischen Schalteinheit 220. Der LA1 219 des zweiten Steckverbinders 210 ist mit dem HA2 212-2 und der zweiten Kontakthälfte 250-2 eines Weiterleitungskontakts 250 des ersten Steckverbinders 210 über eine Verlängerung 400 eines Leitungsverbunds, die hier beispielhaft als Verlängerungskabel ausgebildet ist, elektrisch leitend verbunden. Optional umfasst der zweite Steckverbinder 210 ebenfalls einen Weiterleitungskontakt 250, dessen erste Kontakthälfte 250-1 mit dem HA1 214 desselben Steckverbinders 210 sowie der WL2 250-2 des ersten Steckverbinders 210 elektrisch leitend verbunden ist.

Die Steckkontaktvorrichtung 200 ist in Fig. 2A und 2B im zusammengesteckten Zustand T₀ beider Steckverbinder 210 gezeigt, in dem der LA1 219 jedes Stiftkontakts 212-1 mit dem jeweiligen Buchsenkontakt (HA2) 212-2 über die zugeordnete Kontaktstelle 213 elektrisch leitend verbunden ist und der jeweilige HI1 214 räumlich von der zugeordneten Kontaktstelle 213 getrennt ist. Jeder Steckverbinder 210 umfasst ferner einen Gegenpolkontakt 216 mit einer ersten Kontakthälfte GE1 216-1 und einer zweiten Kontakthälfte 216-2. Die GE1 216-1 des ersten Steckverbinders 210 ist mit dem Gegenpol der Gleichspannungsquelle 230 und die GE2 216-2 des zweiten Steckverbinders 210 mit der Last 240 elektrisch leitend verbunden oder verbindbar. Die GE2 216-2 des ersten Steckverbinders 210 ist mit der GE1 216-1 des zweiten Steckverbinders 210 ferner mittels des Verlängerungskabels 400 verbunden.

Eine erste Hälfte 210-1 jedes Steckverbinders 210 umfasst jeweils eine HA1 212-1 und die GE1 216-1, sowie im Fall des ersten Steckverbinders 210 (und optional des zweiten Steckverbinders 210) jeweils eine WL1 250-1. Eine zweite Hälfte 210-2 jedes Steckverbinders 210 umfasst jeweils eine HA2 212-2 und die GE 216-2, sowie im Fall des ersten Steckverbinders 210 (und optional des zweiten Steckverbinders 210) jeweils eine WL1 250-2. Die GE2 216-2 des ersten Steckverbinders 210 ist mit der GE1 216-1 des zweiten Steckverbinders mittels des Verlängerungskabels 400 elektrisch leitend verbunden. Das Verlängerungskabel 400 umfasst die zweite Hälfte 210-2 des ersten Steckverbinders 210, die erste Hälfte 210-1 des zweiten Steckverbinders 210 sowie alle elektrisch leitenden Verbindungen zwischen den Kontakten der beiden Steckverbinder 210.

Wie in Fig. 2A und 2B dargestellt, kann jede GE1 216-1 als Stiftkontakt und jede GE2 216-2 als Buchsenkontakt ausgebildet sein. Alternativ kann jeder Steckverbinder 210 hermaphroditisch sein mit einer als Buchsenkontakt ausgebildeten GE1 216-1 und einer als Stiftkontakt ausgebildeten GE2 216-2.

Das in Fig. 2B gezeigte Ausführungsbeispiel umfasst ferner für jeden Steckverbinder 210 einen Erdungskontakt PE 218 mit einer als Buchsenkontakt ausgebildeten ersten Kontakthälfte PE1 218-1 und einer als Stiftkontakt ausgebildeten zweiten Kontakthälfte PE2 218-2. Die PE2 218-2 des ersten Steckverbinders 210 ist mit der PE1 218-1 des zweiten Steckverbinders 210 mittels des Verlängerungskabels 400 elektrisch leitend verbunden.

In den in Fig. 2A und 2B gezeigten Ausführungsbeispielen ist der LA1 219 der HA1 212-1 des ersten Steckverbinders 210 mit einem Pol, beispielsweise dem Pluspol, einer Gleichstromquelle 230 verbunden und die HA2 212-1 des zweiten Steckverbinders 210 mit dem gleichen Pol einer Last 240. Die GE1 216-1 des ersten Steckverbinders 210 ist mit dem Gegenpol, beispielsweise dem Minuspol, der Gleichstromquelle 230 verbunden und die GE 216-2 des zweiten Steckverbinders 210 mit dem entsprechenden Pol der Last 240. Die Steckkontaktvorrichtung 200 befindet sich in Fig. 2A und 2B im Normalbetrieb.

Die elektronische Schalteinheit 220 in Fig. 2A und 2B umfasst ein RC-Glied ("Resistor Capacitor"). Das RC-Glied kann als Metall-Oxid-Halbleiter-Feldeffekttransistor (MOSFET) oder Bipolartransistor mit isolierter Gate-Elektrode (IGBT) ausgebildet sein. Alternativ oder ergänzend können auch mehrere RC-Glieder, beispielsweise ein IGBT und ein MOSFET, in Reihe geschaltet sein. Optional umfasst die elektronische Schalteinheit ferner eine Gleichrichterbrücke (nicht gezeigt), die einen bidirektionalen Stromfluss in dem Gleichstromsystem ermöglicht. Durch eine Umkehr der Stromrichtung kann beispielsweise Bremsenergie einer generatorisch betriebenen Elektromaschine rekuperiert werden.

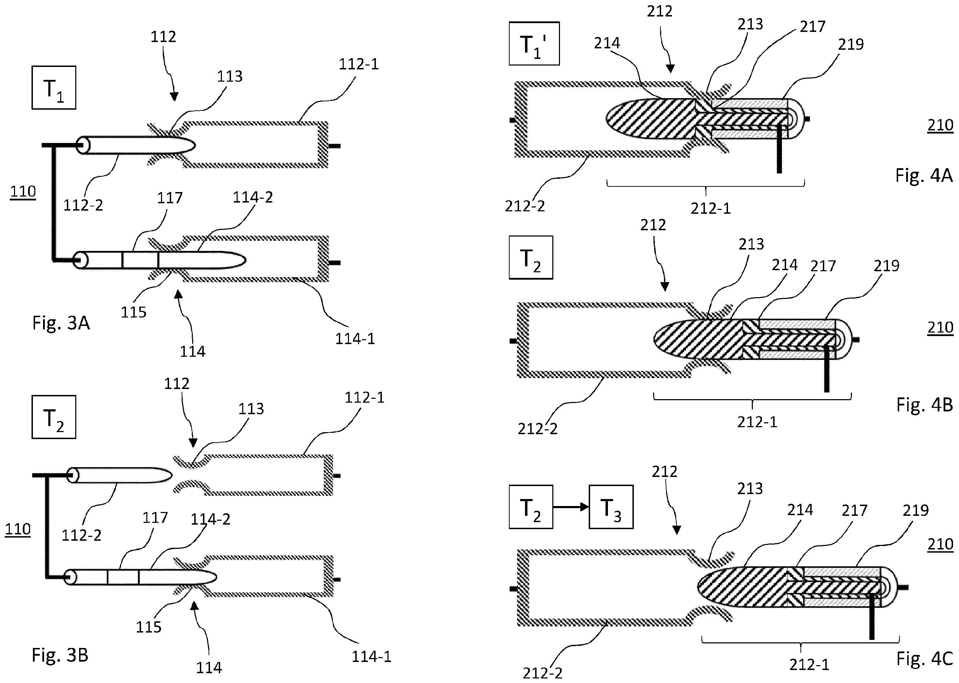

Fig. 3A und 3B zeigen jeweils den HA 112 und HI 114 eines Steckverbinders 110 gemäß dem ersten Aspekt während eines Trennvorgangs. Fig. 3A zeigt den HA 112 und den HI 114 des Steckverbinders 110 in einem ersten Zwischenzustand T₁, beispielsweise beim Trennen der Gleichstromverbindung, in dem sowohl die HA1 112-1 und HA2 112-2 als auch die HI1 114-1 und die HI2 114-2 (über die jeweilige Kontaktstelle 113 bzw. 115) elektrisch leitend verbunden sind. Die elektronische Schalteinheit 120 ist im ersten Zwischenzustand T₁ passiv. Insbesondere kann der Widerstand des RC-Glieds der elektronischen Schalteinheit 120 im ersten Zwischenzustand T₁ hochohmig sein.

Fig. 3B zeigt den HA 112 und den HI 114 des Steckverbinders 110 in einem zweiten Zwischenzustand T₂, in dem die HA1 112-1 und die HA2 112-2 galvanisch getrennt sind, indem die HA2 112-2 räumlich von der Kontaktstelle 113 getrennt ist. Zwischen der HA2 112-2 und der Kontaktstelle 113 der HA1 112-1 des Steckverbinders 110 entsteht ein Lichtbogen. Über den ersten Anschluss 122 wird die elektronische Schalteinheit 120 aktiviert. Die Aktivierung bewirkt, dass die elektronische Schalteinheit 120 (oder ihr RC-Glied) leitend wird. Insbesondere kann das RC-Glied im zweiten Zwischenzustand T₂ niederohmig sein. Die HI1 114-1 und die HI2 114-2 sind im zweiten Zwischenzustand T₂ weiterhin über die Kontaktstelle 115 elektrisch leitend verbunden. Der Gleichstrom fließt nun von der Gleichstromquelle 130 aus über die elektronische Schalteinheit 120 und den HI 114. Wenn der zweite Steckverbinder 110 getrennt wird, erfolgt die Weiterleitung des Stromflusses über den WL 150 des ersten Steckverbinders 110, der sich im in Fig. 1A und 1B gezeigten zusammengesteckten Zustand T₀ befindet. Vorzugsweise umfasst die elektronische Schalteinheit 120 ein Zeitglied, welches bewirkt, dass der Stromfluss über den HI 114 nach einer vorbestimmten Zeitspanne unterbrochen wird. Die Unterbrechung des Stromflusses kann zeitlich vor einer galvanischen Trennung der HI 114, GE 116 und PE 118 erfolgen.

In einem optionalen (nicht gezeigten) dritten Zwischenzustand eines jeden Steckverbinders sind die Kontakte HA 112, HI 114, WL 150 und GE 116 galvanisch getrennt, während der Erdungskontakt PE 118 noch elektrisch leitend verbunden ist. Im (nicht gezeigten) gelösten Zustand T₃ sind alle Kontakte HA 112, HI 114, WL 150, GE 116 und PE 118 galvanisch getrennt. In dem gelösten Zustand T₃ können die beiden Kontakthälften 110-1 und 110-2 des Steckverbinders 110 räumlich getrennt sein.

Fig. 4A bis 4C zeigen jeweils den HA 212 eines Steckverbinders 210 gemäß dem zweiten Aspekt während eines Trennvorgangs. Fig. 4A zeigt den HA 212 des Steckverbinders 210 in einem ersten Zwischenzustand T₁', in dem der Trennabschnitt 217, welcher als umlaufende Isolierung ausgebildet sein kann, der HA1 212-1 an der Kontaktstelle 213 der HA2 212-2 anliegt. Der LA1 219 ist galvanisch getrennt von der HA2 212-2. Zwischen dem LA1 219 und der Kontaktstelle 213 des HA2 212-2 entsteht ein Lichtbogen. Über den ersten Anschluss 222 wird die elektronische Schalteinheit 220 aktiviert. Falls der zweite Steckverbinder 210 getrennt wird, erfolgt die Aktivierung der elektronischen Schalteinheit 220 über den WL 250 des ersten Steckverbinders 210, der sich im in Fig. 2A und 2B gezeigten zusammengesteckten Zustand T₀ befindet. Die Aktivierung bewirkt, dass die elektronische Schalteinheit 220 (oder ihr RC-Glied) leitend wird. Optional ist bereits der HI1 214 des Steckverbinders 210 über die Kontaktstelle 213 mit der HA2 212-2 leitend verbunden.

Fig. 4B zeigt den HA 212 des Steckverbinders 210 in einem zweiten Zwischenzustand T₂, in dem der Hilfskontaktabschnitt HI1 214 an der Kontaktstelle 213 der HA2 212-2 anliegt. Der als umlaufende Isolierung ausgebildete TA1 217 befindet sich außerhalb des Buchsenkontakts HA2 212-2. Der HI1 214 ist über die Kontaktstelle 213 mit der HA2 212-2 elektrisch leitend verbunden. Der Gleichstrom fließt nun von der Gleichstromquelle 230 aus über die elektronische Schalteinheit 220, den HI1 214 und die HA2 212-2 des im Trennvorgang befindlichen Steckverbinders 210. Sofern der zweite Steckverbinder 210 getrennt wird, erfolgt der Stromfluss von der Gleichstromquelle 230 über den LA1 219 des ersten Steckverbinders 210, der sich im in Fig. 2A und 2B gezeigten zusammengesteckten Zustand T₀ befindet. Vorzugsweise umfasst die elektronische Schalteinheit 220 ein Zeitglied, welches bewirkt, dass der Stromfluss über den HI1 214 und die HA2 212-2 des im Trennvorgang befindlichen Steckverbinders 210 nach einer vorbestimmten Zeitspanne unterbrochen wird. Die Unterbrechung des Stromflusses kann zeitlich vor einer galvanischen Trennung des HI1 214 von der HA2 212-2 und/oder einer galvanischen Trennung der GE 216 und/oder PE 218 des jeweiligen Steckverbinders 210 erfolgen. Nachdem der Stromfluss unterbrochen ist, können die erste Hälfte 210-1 und die zweite Hälfte 210-2 des Steckverbinders 210 ohne Lichtbogen getrennt werden.

Fig. 4C zeigt den HA 212 des Steckverbinders 210 im Übergang vom zweiten Zwischenzustand T₂ zum gelösten Zustand T₃. Dieser Übergang kann auch als dritter Zwischenzustand bezeichnet werden. Der HI1 214 wird in diesem Zustand von der HA2 212-2 galvanisch getrennt. Ferner wird der GE 216 galvanisch getrennt, während der Erdungskontakt PE 218 noch elektrisch leitend verbunden ist. Im (nicht gezeigten) gelösten Zustand T₃ sind alle Kontakte HA 212 (sowohl HI1 214 als auch LA1 219 von HA2 212-2), GE 116 und PE 118 des Steckverbinders 210 galvanisch getrennt. In dem gelösten Zustand T₃ können die beiden Kontakthälften 210-1 und 210-2 des Steckverbinders 210 räumlich getrennt sein.

Die Hilfskontakte 114 oder der Hilfskontaktabschnitt 214 sind in jedem Ausführungsbeispiel im zusammengesteckten Zustand galvanisch von den weiteren Kontakten, insbesondere dem Hauptkontakt 112, 212 und dem jeweiligen Gegenkontakt 116, 216 des Steckverbinders 110, 210 getrennt. Es kann daher keinen Kurzschluss in den Systemen geben. Auch eine parallele Anordnung mehrerer Stränge ist ohne weiteres möglich.

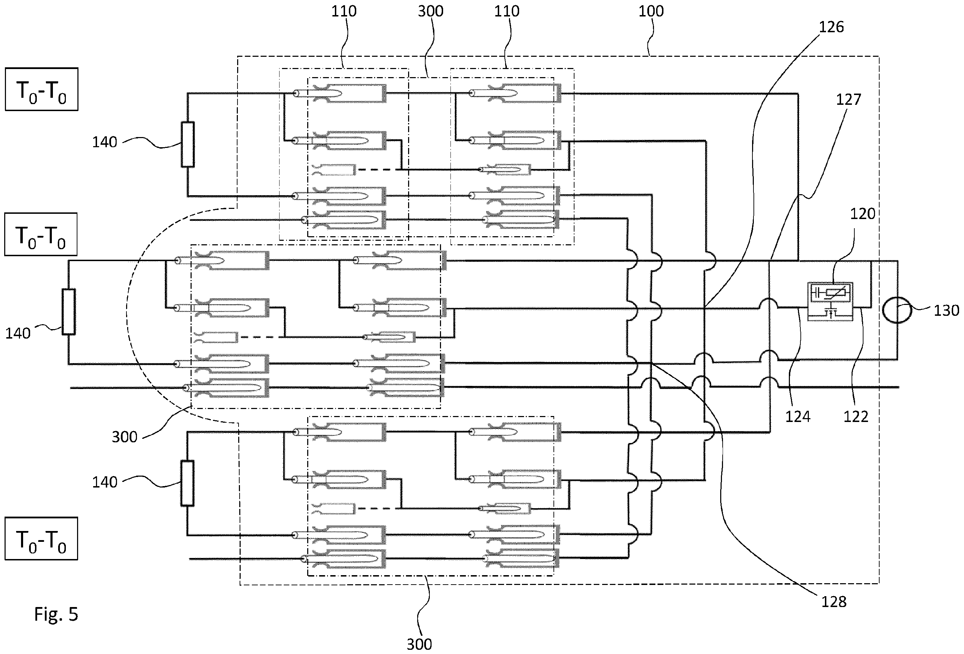

Fig. 5 zeigt eine Steckkontaktvorrichtung 100 mit je drei ersten Steckverbindern 110 und jeweils einem zweiten mittels einer Verlängerung 300 eines Leitungsverbunds, beispielsweise einem Verlängerungskabel, verbundenen Steckverbinder 110. Jeder Steckverbinder 110 und jedes Verlängerungskabel 300 ist baugleich zu den gleichen Komponenten gemäß Fig. 1B und im jeweils zusammengesteckten Zustand T₀ dargestellt. Jeder HI 114 ist im zusammengesteckten Zustand T₀ durch den Trennabschnitt 117 galvanisch getrennt. Auf der Seite der Gleichstromquelle 130 sind die HI 114 aller ersten Steckverbinder 110 am Punkt 126 parallelgeschaltet, so dass alle HI 114 der ersten Steckverbinder 110 mit nur einer (gemeinsamen) elektronischen Schalteinheit 120 über den zweiten Anschluss 124 elektrisch leitend verbunden sind. Die (gemeinsame) elektronische Schalteinheit 120 ist mit den am Punkt 127 parallelgeschalteten HA 112 aller ersten Steckverbinder 110 elektrisch leitend verbunden. Die GE 118 aller ersten Steckverbinder 110 sind am Punkt 128 parallelgeschaltet.

Wird ein beliebiger der ersten oder zweiten Steckverbinder 110 getrennt, so wird - wie mit Bezug auf Fig. 3A und 3B beschrieben - der zugehörige HI 114 in die leitenden ersten und zweiten Zwischenzustände T₁ und T₂ überführt und eine Verbindung mit der elektronischen Schalteinheit 120 hergestellt. Wenn einer der zweiten Steckverbinder 110 getrennt wird, erfolgt die Verbindung mit der elektronischen Schalteinheit 120 über das zugehörige Verlängerungskabel 300 und die WL 150 des zugehörigen ersten Steckverbinders 110.

Durch die Steckkontaktvorrichtung 100, insbesondere durch den Trennabschnitt 117 des Hilfskontakts HI 114 und die Verbindung mittels des Weiterleitungskontakts 150 gemäß dem ersten Aspekt (oder durch den Trennabschnitt 217 zwischen Lastkontaktabschnitt 214 und Hilfskontaktabschnitt 219 gemäß dem zweite Aspekt) bei Verwendung eines Verlängerungskabels 300 (oder 400) können weitere Bauteile, insbesondere Dioden in oder an der ersten Kontakthälfte HI1 114-1 oder dem Hilfskontaktabschnitt 214, vermieden werden.

Die Steckverbinder 110 in den anderen (zusammengesteckten) Strängen sind von der Trennung des einen beliebigen Steckverbinders 110 und dem resultierenden Lichtbogen im zugehörigen HA 112 sowie Stromfluss im zugehörigen HI 114 nicht betroffen, da ihre jeweiligen HI 114 weiterhin galvanisch von der (gemeinsamen) elektronischen Schalteinheit 120 getrennt sind. Es gibt im Normalbetrieb also selbst bei Verwendung von Verlängerungskabeln keinen Kurzschluss zwischen verschiedenen Strängen. Eine Problematik analog zu der in der Patentschrift EP 2 742 565 B1 beschriebenen besteht nur, wenn mehr als ein Steckverbinder 110 in unterschiedlichen Strängen gleichzeitig getrennt werden können. Werden zwei (oder mehr) Steckverbinder 110 in unterschiedlichen Strängen gleichzeitig gezogen, so kann ein Kurzschluss zwischen diesen beiden (oder mehr) Strängen auftreten.

Ein weiteres Ausführungsbeispiel (ohne Figur) umfasst ein Mehrfachstecksystem mit Steckverbindern 210 und Verlängerungen 400 von Leitungsverbünden gemäß dem zweiten Aspekt.

Das (beispielsweise im Ausführungsbeispiel der Fig. 5 gezeigte) Mehrfachstecksystem kann auf Gebäudeinstallationsebene hoch skaliert werden. Die elektronische Schalteinheit (beispielsweise die Schalteinheit 120) wird dementsprechend nicht in einem Mehrfachstecksystem integriert, sondern beispielsweise zentral in einer Unterverteilung eines Raumes oder einer Etage. Daher muss der beschriebene Hilfskontakt (beispielsweise HI 114) über eine zusätzliche Leitung mit der elektronischen Schalteinheit (beispielsweise Schalteinheit 120) verbunden werden. Da es sich nicht um eine Steuerleitung oder Signalleitung handelt, kann diese Verbindung auch als "X-Leiter" bezeichnet werden.

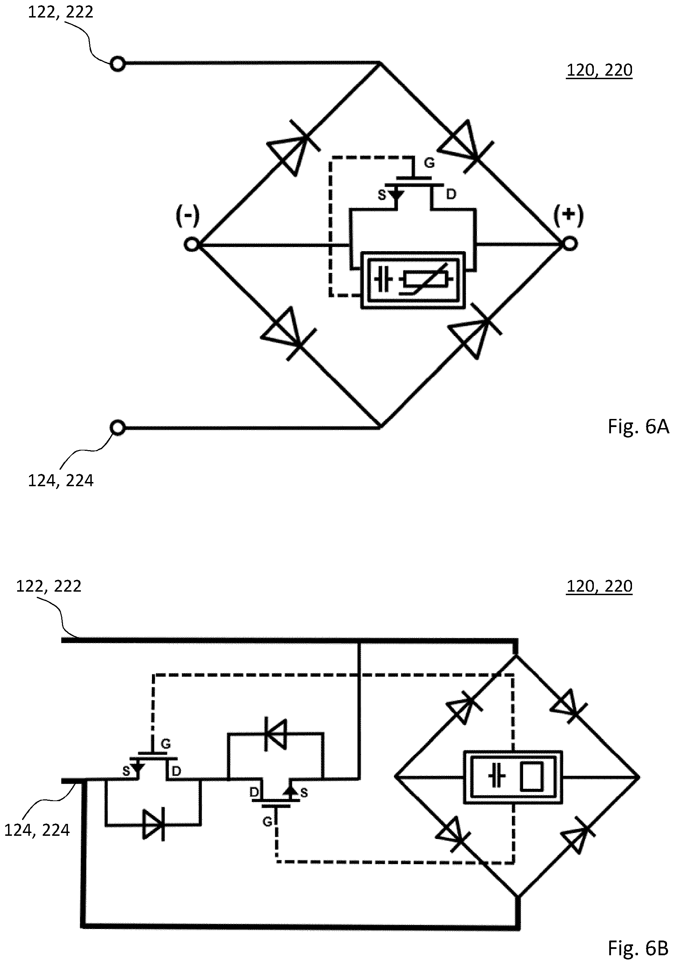

Fig. 6A und 6B zeigen zwei Ausführungsbeispiele einer bidirektionalen elektronischen Schalteinheit 120, 220, die eine Gleichrichterbrücke umfasst. Die Gleichrichterbrücke ist über einen ersten Anschluss 122, 222 mit der HA1 112-1 bzw. dem LA1 219 und über einen zweiten Anschluss 124, 224 mit der HI1 114-1, 214 verbindbar.

Die beiden weiteren (inneren) Anschlüsse der Gleichrichterbrücke sind im in Fig. 6A gezeigten Ausführungsbeispiel über eine Parallelschaltung eines Halbleiterschalters und eines RC-Glieds mit variablem Widerstand miteinander verbunden, wobei die Impedanz des Halbleiterschalters mittels eines Steuersignals (gestrichelt gezeichnet) geändert werden kann. Über die Dioden der Gleichrichterbrücke wird unabhängig von einer außen (an dem ersten und zweiten Anschluss) anliegenden Polarität an den (beiden weiteren) inneren Anschlüssen eine spezifische Polarität sichergestellt und ein bidirektionaler Stromfluß durch den HA 112 (bzw. die HA2 212-2 und den LA1 219) und den HI 114 (bzw. die HA2 212-2 und den HI1 214) ermöglicht.

In dem in Fig. 6B gezeigten Ausführungsbeispiel umfasst die elektronische Schalteinheit 120, 220 einen Verpolschutz, der zwei in entgegengesetzter Richtung miteinander in Reihe geschalteten Halbleiterschalter und jeweils eine in Sperrrichtung parallel geschaltete Diode umfasst (links in Fig. 6B). Die jeweils parallel geschaltete Diode wirkt in Sperrrichtung des Halbleiterschalters als Bypass. Ferner umfasst die elektronische Schalteinheit 120, 220 in Fig. 6B einen Trigger-Schaltkreis, der die beiden weiteren (inneren) Anschlüsse der Gleichrichterbrücke (rechts in Fig. 6B) verbindet. Der Trigger-Schaltkreis verändert (z.B. verringert) abhängig von einer außen anliegenden Polarität die Impedanz eines oder beider der zwei in Reihe geschalteten Halbleiterschalter mittels (gestrichelt dargestellter) Steuersignale. Alternativ kann auch ein unipolarer Halbleiterschalter verwendet werden.

Die Zuleitung zu der elektronischen Schalteinheit (beispielsweise Schalteinheit 120) zu verlängern, ist für jemanden mit technischem Hintergrund womöglich noch offensichtlich und stellt für sich alleine keine technische Neuerung dar. Jedoch muss im Stand der Technik, beispielsweise in der Patentschrift EP 2 742 565 B1, jeder Steckverbinder (beispielsweise bestehend aus gleichstromquellenseitiger Buchseneinheit und lastenseitiger Steckereinheit) mit einer Diode, entweder im Steckverbinder, oder zumindest irgendwo in der (als Steuerleitung ausgebildeten) Hilfsleitung ausgestattet werden. In der erfindungsgemäßen Steckkontaktvorrichtung (beispielsweise der Steckkontaktvorrichtung 100) werden diese Dioden durch eine sichere galvanische Trennung der Hilfskontakte (beispielsweise den HI 114) oder Hilfskontaktabschnitte mittels eines (isolierenden) Trennabschnitts (beispielsweise des Trennabschnitts 117) ersetzt, der im zusammengesteckten Zustand die metallischen Kontaktpartner von Stiftkontakt und Buchsenkontakt voneinander trennt. Die Ausgestaltung in Form von rundem Stift und runder Buchse ist dabei nur exemplarisch. So ein Isolator kann auch bei hermaphroditischen Kontakten oder bei Flachkontakten eingesetzt werden. Da im zusammengesteckten Zustand beispielsweise die Hilfskontakte (beispielsweise HI 114) aller Steckverbinder (beispielsweise Steckverbinder 110) gemäß dem ersten Aspekt auf dem jeweiligen (isolierten) Trennabschnitt (beispielsweise dem Trennabschnitt 117) der Hilfskontakte in Ruheposition sind, kann somit auch kein Kurzschluss zwischen verschiedenen Steckverbindern entstehen. Ebenso ist der HI1 214 gemäß dem zweiten Aspekt in Ruheposition galvanisch von der HA2 212-2 getrennt. Erst beim Trennvorgang eines Steckverbinders wird eine leitende Verbindung zu der elektronischen Schalteinheit (beispielsweise der Schalteinheit 120) hergestellt.

Die Ausführungsbeispiele der Fig. 1A und 1B, Fig. 3A und 3B sowie Fig. 5 gemäß dem ersten Aspekt weisen für jeden der mindestens zwei Steckverbinder Buchsenkontakte als HA1 112-1, HI1 114-1, WL1 150-1, GE1 116-1 und optional PE1 118-1 und Stiftkontakte als HA2 112-2, HI 112-2, WL2 150-2, GE2 116-2 und optional PE2 118-2 auf. Weitere (nicht gezeigte) Ausführungsbeispiele entsprechen der Vertauschung von Stiftkontakten und Buchsenkontakten. Ferner sind beliebige hermaphroditische Kombinationen der Steckverbinderhälften möglich.

Die Ausführungsbeispiele der Fig. 2A und 2B sowie Fig. 4A bis 4C gemäß dem zweiten Aspekt weisen für jeden der mindestens zwei Steckverbinder Stiftkontakte als HA1 212-1, WL1 250-1, GE1 216-1 und optional PE1 218-1 und Buchsenkontakte als HA2 212-2, WL2 250-2, GE2 216-2 und optional PE2 218-2 auf. Weitere (nicht gezeigte) Ausführungsbeispiele entsprechen der Vertauschung von Stiftkontakten und Buchsenkontakten. Ferner sind beliebige hermaphroditische Kombinationen der Steckverbinderhälften möglich.

Des Weiteren sind die Verlängerungen 300, 400 von Leitungsverbünden in den Fig. 1A bis 5 mit jeweils ineinander steckbaren Hälften des ersten und des zweiten Steckverbinders 110, 210 gezeigt. Weitere mögliche (nicht gezeigte) Ausführungsbeispiele einer Steckkontaktvorrichtung umfassen mindestens eine Verlängerung eines Leitungsverbunds, die an einem ersten Ende eine Hälfte eines Steckverbinders gemäß dem ersten Aspekt und an einem zweiten Ende eine Hälfte eines Steckverbinders gemäß dem ersten Aspekt umfasst. Alternativ oder ergänzend kann eine Verlängerung eines Leitungsverbunds zwei unterschiedliche Steckverbinderhälften gemäß demselben (ersten oder zweiten) Aspekt an den beiden Enden umfassen. Das erste Ende kann wahlweise dem gleichstromquellenseitigen oder dem lastenseitigen Ende der (beispielsweise als Verlängerungskabel ausgebildeten) Verlängerung eines Leitungsverbunds entsprechen. Ein solches Verlängerungskabel kann auch als Adapterkabel (beispielsweise zwischen zwei Steckverbindersystemen) bezeichnet werden.

Obwohl die Erfindung in Bezug auf exemplarische Ausführungsbeispiel beschrieben worden ist, ist es für einen Fachmann ersichtlich, dass verschiedene Änderungen vorgenommen werden können und Äquivalente als Ersatz verwendet werden können. Ferner können viele Modifikationen vorgenommen werden, um eine bestimmte Situation oder ein bestimmtes Material an die Lehre der Erfindung anzupassen. Folglich ist die Erfindung nicht auf die offenbarten Ausführungsbeispiele beschränkt, sondern umfasst alle Ausführungsbeispiele, die in den Bereich der beigefügten Patentansprüche fallen.

### Bezugszeichenliste

| | |
|---|---|
| Steckkontaktvorrichtung | 100, 200 |
| Steckverbinder | 110, 210 |
| Erste Steckverbinderhälfte | 110-1, 210-1 |
| Zweite Steckverbinderhälfte | 110-2, 210-2 |
| Hauptkontakt (HA) | 112, 212 |
| Erste Kontakthälfte des Hauptkontakts (HA1) | 112-1, 212-1 |
| Zweite Kontakthälfte des Hauptkontakts (HA2) | 112-2, 212-2 |
| Kontaktstelle des Hauptkontakts | 113, 213 |
| Hilfskontakt (HI) | 114 |
| Erste Kontakthälfte des Hilfskontakts (HI1) | 114-1 |
| Zweite Kontakthälfte des Hilfskontakts (HI2) | 114-2 |
| Kontaktstelle des Hilfskontakts | 115 |
| Gegenpolkontakt (GE) | 116, 216 |
| Erste Kontakthälfte des Gegenpolkontakts (GE1) | 116-1, 216-1 |
| Zweite Kontakthälfte des Gegenpolkontakts (GE2) | 116-2, 216-2 |
| Trennabschnitt des Hilfskontakts | 117 |
| Erdungskontakt (PE) | 118, 218 |
| Erste Kontakthälfte des Erdungskontakts (PE1) | 118-1, 218-1 |
| Zweite Kontakthälfte des Erdungskontakts (PE2) | 118-2, 218-2 |
| Elektronische Schalteinheit | 120, 220 |
| Erster Anschluss | 122, 222 |
| Zweiter Anschluss | 124, 224 |
| Parallelschaltung von Hilfskontakten | 126 |
| Parallelschaltung von Hauptkontakten | 127 |
| Parallelschaltung von Gegenpolkontakten | 128 |
| Gleichstromquelle | 130, 230 |
| Last | 140, 240 |
| Weiterleitungskontakt (WL) | 150, 250 |
| Erste Kontakthälfte des Weiterleitungskontakts (WL1) | 150-1, 250-1 |
| Zweite Kontakthälfte des Weiterleitungskontakts (WL2) | 150-2, 250-2 |
| Erster Hilfskontaktabschnitt (HI1) | 214 |
| Lastkontaktabschnitt (LA1) | 219 |
| Trennabschnitt (TA1) | 217 |
| Verlängerungskabel | 300, 400 |
| Zusammengesteckter Zustand | T₀ |
| Erster Zwischenzustand | T₁, T₁' |
| Zweiter Zwischenzustand | T₂ |
| Gelöster Zustand | T₃ |

## Patentansprüche

1. Steckkontaktvorrichtung (100) zur Vermeidung oder Löschung eines Lichtbogens beim Trennen oder Schließen einer Gleichstromverbindung unter Verwendung einer Verlängerung (300) eines Leitungsverbunds, umfassend:
mindestens zwei Steckverbinder (110) an den Enden einer Verlängerung (300) eines Leitungsverbunds mit jeweils einem Hauptkontakt, HA (112), und einem Hilfskontakt, Hl (114),
wobei der HA (112) jedes der mindestens zwei Steckverbinder (110) eine erste Kontakthälfte, HA1 (112-1), und eine zweite Kontakthälfte, HA2 (112-2), umfasst, die lösbar zusammensteckbar sind, wobei der HA (112) dazu ausgebildet ist,
- in einem zusammengesteckten Zustand (T₀) des jeweiligen Steckverbinders (110) die HA1 (112-1) und die HA2 (112-2) elektrisch leitend zu verbinden,
- in einem gelösten Zustand (T₃) des jeweiligen Steckverbinders (110) die HA1 (112-1) und die HA2 (112-2) galvanisch zu trennen,
- in einem ersten Zwischenzustand (T₁) des jeweiligen Steckverbinders (110) zwischen dem zusammengesteckten Zustand (T₀) und dem gelösten Zustand die HA1 (112-1) und die HA2 (112-2) elektrisch leitend zu verbinden und
- in einem zweiten Zwischenzustand (T₂) des jeweiligen Steckverbinders (110) zwischen dem ersten Zwischenzustand (T₁) und dem gelösten Zustand die HA1 (112-1) und die HA2 (112-2) galvanisch zu trennen,
wobei der Hilfskontakt, Hl (114), jedes der mindestens zwei Steckverbinder (110) eine erste Kontakthälfte, HI1 (114-1), und eine zweite Kontakthälfte, HI2 (114-2), umfasst, die lösbar zusammensteckbar sind, wobei der Hl (114) dazu ausgebildet ist,
- im zusammengesteckten Zustand (T₀) des jeweiligen Steckverbinders die HI1 (114-1) und die HI2 (114-2) galvanisch zu trennen,
- im gelösten Zustand (T₃) des jeweiligen Steckverbinders die HI1 (114-1) und die HI2 (114-2) galvanisch zu trennen,
- im ersten Zwischenzustand (T₁) des jeweiligen Steckverbinders die HI1 (114-1) und die HI2 (114-2) elektrisch leitend zu verbinden, und
- im zweiten Zwischenzustand (T₂) des jeweiligen Steckverbinders die HI1 (114-1) und die HI2 (114-2) elektrisch leitend zu verbinden,
und wobei
- die HA2 (112-2) und die HI2 (114-2) des jeweiligen Steckverbinders (110) elektrisch leitend verbunden sind; und
- die HA2 (112-2) eines ersten Steckverbinders (110) mit der HA1 (112-1) eines zweiten Steckverbinders (110) elektrisch leitend verbunden ist; und
eine elektronische Schalteinheit (120), deren erster Anschluss (122) mit der HA1 (112-1) des ersten Steckverbinders (110) und deren zweiter Anschluss (124) mit der HI1 (114-1) des ersten Steckverbinders (110) und des zweiten Steckverbinders (110) elektrisch leitend verbunden sind, wobei die elektronische Schalteinheit (120) dazu ausgebildet ist, in Reaktion auf einen Übergang vom zusammengesteckten Zustand (T₀) in den ersten Zwischenzustand (T₁) mindestens eines der Steckverbinder (110) den ersten Anschluss (122) und den zweiten Anschluss (124) elektrisch leitend zu verbinden oder eine Impedanz zwischen dem ersten Anschluss (122) und dem zweiten Anschluss (124) zu verkleinern, und in Reaktion auf einen Übergang vom ersten Zwischenzustand (T₁) in den zweiten Zwischenzustand (T₂) mindestens eines der Steckverbinder (110) und/oder vom zweiten Zwischenzustand (T₂) in den gelösten Zustand mindestens eines der Steckverbinder (110) den ersten Anschluss (122) und den zweiten Anschluss (124) elektrisch zu trennen oder eine Impedanz zwischen dem ersten Anschluss (122) und dem zweiten Anschluss (124) zu vergrößern.

2. Steckkontaktvorrichtung (200) zur Vermeidung oder Löschung eines Lichtbogens beim Trennen oder Schließen einer Gleichstromverbindung unter Verwendung einer Verlängerung (400) eines Leitungsverbunds, umfassend:
mindestens zwei Steckverbinder (210) an den Enden einer Verlängerung (400) eines Leitungsverbunds mit jeweils einem Hauptkontakt, HA (212), wobei der HA (212) jeweils eine erste Kontakthälfte, HA1 (212-1), und eine zweite Kontakthälfte, HA2 (212-2), umfasst, die lösbar zusammensteckbar sind, wobei die HA1 (212-1) einen Lastkontaktabschnitt, LA1 (219), einen Trennabschnitt, TA1 (217), und einen Hilfskontaktabschnitt, HI1 (214), umfasst,
wobei der HA (212) jedes der mindestens zwei Steckverbinder (210) dazu ausgebildet ist,
- in einem zusammengesteckten Zustand (T₀) des jeweiligen Steckverbinders (210) den LA1 (219) und die HA2 (212-2) elektrisch leitend zu verbinden und den HI1 (214) von der HA2 (212-2) galvanisch zu trennen,
- in einem gelösten Zustand (T₃) des jeweiligen Steckverbinders (210) den LA1 (219) und den HI1 (214) von der HA2 (212-2) galvanisch zu trennen,
- in einem ersten Zwischenzustand (T₁') des jeweiligen Steckverbinders (210) zwischen dem zusammengesteckten Zustand (T₀) und dem gelösten Zustand (T₃) den LA1 (219) und die HA2 (212-2) galvanisch zu trennen und mindestens den TA1 (217) mit einer Kontaktstelle (213) der HA2 (212-2) in Anlage zu bringen; und
- in einem zweiten Zwischenzustand (T₂) des jeweiligen Steckverbinders (210) zwischen dem ersten Zwischenzustand (T₁) und dem gelösten Zustand (T₃) den HI1 (214) mit der HA2 (212-2) elektrisch leitend zu verbinden und den LA1 (219) und die HA2 (212-2) galvanisch zu trennen,
und wobei die HA2 (212-2) eines ersten Steckverbinders (210) mit der HA1 (212-1) eines zweiten Steckverbinders (210) elektrisch leitend verbunden ist; und
eine elektronische Schalteinheit (220), deren erster Anschluss (222) mit dem LA1 (219) des ersten Steckverbinders (210) und deren zweiter Anschluss (224) mit dem HI1 (214) des ersten Steckverbinders (210) und des zweiten Steckverbinders (210) elektrisch leitend verbunden ist, wobei die elektronische Schalteinheit (220) dazu ausgebildet ist, in Reaktion auf einen Übergang vom zusammengesteckten Zustand (T₀) in den ersten Zwischenzustand (T₁') den ersten Anschluss (222) und den zweiten Anschluss (224) elektrisch leitend zu verbinden oder eine Impedanz zwischen dem ersten Anschluss (222) und dem zweiten Anschluss (224) zu verkleinern, und in Reaktion auf einen Übergang vom ersten Zwischenzustand (T₁') in den zweiten Zwischenzustand (T₂) und/oder vom zweiten Zwischenzustand (T₂) in den gelösten Zustand (T₃) den ersten Anschluss (222) und den zweiten Anschluss (224) elektrisch zu trennen oder eine Impedanz zwischen dem ersten Anschluss (222) und dem zweiten Anschluss (224) zu vergrößern.

3. Steckkontaktvorrichtung (100; 200) nach Anspruch 1 oder 2, wobei die elektronische Schalteinheit (120; 220) ferner dazu ausgebildet ist, in Reaktion auf einen Übergang vom gelösten Zustand in den zweiten Zwischenzustand (T₂) und/oder vom zweiten Zwischenzustand (T₂) in den ersten Zwischenzustand (T₁; T₁') eines der mindestens zwei Steckerbinder (110; 210) den ersten Anschluss (122; 222) und den zweiten Anschluss (124; 224) elektrisch leitend zu verbinden oder eine Impedanz zwischen dem ersten Anschluss (122; 222) und dem zweiten Anschluss (124; 224) zu verkleinern, und in Reaktion auf einen Übergang vom ersten Zwischenzustand (T₁; T₁') in den zusammengesteckten Zustand (T₀) eines der mindestens zwei Steckerbinder (110; 210) den ersten Anschluss (122; 222) und den zweiten Anschluss (124; 224) elektrisch zu trennen oder eine Impedanz zwischen dem ersten Anschluss (122; 222) und dem zweiten Anschluss (124; 224) zu vergrö-βern, und/oder
wobei ein Pol einer Gleichstromquelle (130; 230) der Gleichstromverbindung, vorzugsweise ein Pluspol der Gleichstromquelle (130; 230), mit der HA1 (112-1; 212-1) bzw. dem LA1 (219) des Hauptkontakts (112; 212) des ersten Steckverbinders (110; 210) und/oder dem ersten Anschluss (122; 222) der elektronischen Schalteinheit (120; 220) elektrisch leitend verbunden oder verbindbar ist, und wobei ein Pol eines elektrischen Verbrauchers, vorzugsweise ein Pluspol des Verbrauchers, mit der HA2 (112-2; 212-2) des Hauptkontakts (112; 212) des zweiten Steckverbinders (110; 210) und/oder der HI2 (114-2) des Hilfskontakts (114) des zweiten Steckverbinders (110) elektrisch leitend verbunden oder verbindbar ist; und/oder
wobei ein Pol einer Gleichstromquelle (130; 230) der Gleichstromverbindung, vorzugsweise ein Pluspol der Gleichstromquelle (130; 230), mit der HA2 (112-2; 212-2) des Hauptkontakts (112; 212) des zweiten Steckverbinders (110; 210) und/oder der HI2 (114-2) des Hilfskontakts (114) des zweiten Steckverbinders (110) elektrisch leitend verbunden oder verbindbar ist, und wobei ein Pol eines elektrischen Verbrauchers, vorzugsweise ein Pluspol des Verbrauchers, mit der HA1 (112-1; 212-1) bzw. dem LA1 (219) des Hauptkontakts (112; 212) des ersten Steckverbinders (110; 210) und/oder dem ersten Anschluss (122; 222) der elektronischen Schalteinheit (120; 220) elektrisch leitend verbunden oder verbindbar ist.

4. Steckkontaktvorrichtung (100; 200) nach einem der Ansprüche 1 bis 3, wobei mindestens der erste Steckverbinder (110; 210) einen Weiterleitungskontakt, WL (150; 250), mit einer ersten Kontakthälfte, WL1 (150-1; 250-1), und einer zweiten Kontakthälfte, WL2 (150-2; 250-2), umfasst, wobei die WL1 (150-1; 250-1) des WL (150; 250) des ersten Steckverbinders (110; 210) mit dem ersten Anschluss (122; 222) der elektronischen Schalteinheit (120; 220) und/oder der HI1 (114-1; 214) elektrisch verbunden ist und die WL2 (150-2; 250-2) des WL (150; 250) des ersten Steckverbinders (110; 210) mit der HI1 (114-1; 214) des zweiten Steckverbinders (110; 210) elektrisch leitend verbunden ist;
optional wobei der zweite Steckverbinder (110; 210) einen Weiterleitungskontakt, WL (150; 250), mit einer ersten Kontakthälfte, WL1 (150-1; 250-1), und einer zweiten Kontakthälfte, WL2 (150-2; 250-2), umfasst, wobei die WL1 (150-1; 250-1) des WL (150; 250) des zweiten Steckverbinders (110; 210) elektrisch leitend mit der HI1 (114-1; 214) des zweiten Steckverbinders (110; 210) und/oder der WL2 (150-2; 250-2) des ersten Steckverbinders (110; 210) elektrisch leitend verbunden ist.

5. Steckkontaktvorrichtung (100) nach einem der Ansprüche 1 oder 4, wobei die HA1 (112-1; 212-1) jedes der mindestens zwei Steckverbinder (110; 210) einen Stiftkontakt und die HA2 (112-2; 212-2) jedes der mindestens zwei Steckverbinder (110; 210) einen Buchsenkontakt umfasst, oder wobei die HA2 (112-2; 212-2) jedes der mindestens zwei Steckverbinder (110; 210) einen Stiftkontakt und die HA1 (112-1; 212-1) jedes der mindestens zwei Steckverbinder (110; 210) einen Buchsenkontakt umfasst; und/oder
wobei die erste Kontakthälfte, HI1 (114-1), des Hilfskontakts jedes der mindestens zwei Steckverbinder (110) einen Stiftkontakt und die zweite Kontakthälfte, HI2 (114-2), des Hilfskontakts jedes der mindestens zwei Steckverbinder (110) einen Buchsenkontakt umfasst, oder wobei die zweite Kontakthälfte, HI2 (114-2), des Hilfskontakts jedes der mindestens zwei Steckverbinder (110) einen Stiftkontakt und die erste Kontakthälfte, HI1 (114-1), des Hilfskontakts jedes der mindestens zwei Steckverbinder (110) einen Buchsenkontakt umfasst;
optional in Kombination mit Anspruch 5 wobei die WL1 (150-1; 250-1) des ersten oder jedes der mindestens zwei Steckverbinder (110; 210) einen Stiftkontakt und die WL2 (150-2; 250-2) des ersten oder jedes der mindestens zwei Steckverbinder (110; 210) einen Buchsenkontakt umfasst, oder wobei die WL2 (150-2; 250-2) des ersten oder jedes der mindestens zwei Steckverbinder (110; 210) einen Stiftkontakt und die WL1 (150-1; 250-1) des ersten oder jedes der mindestens zwei Steckverbinder (110; 210) einen Buchsenkontakt umfasst, oder
optional wobei ein Außenprofil des Stiftkontakts und/oder ein Innenprofil des Buchsenkontakts des HA (112; 212) jedes der mindestens zwei Steckverbinder (110; 210) und/oder ein Au-βenprofil des Stiftkontakts und/oder ein Innenprofil des Buchsenkontakts des Hilfskontakts, Hl (114), des jeweiligen Steckverbinders (110; 210) einen runden, ovalen oder mehreckigen Querschnitt aufweist, und/oder wobei der HA (112; 212) und/oder der Hilfskontakt, Hl (114), und/oder ein Weiterleitungskontakt, WL (150; 250), des jeweiligen Steckverbinders (110; 210) hermaphroditisch sind.

6. Steckkontaktvorrichtung (100; 200) nach einem der Ansprüche 1 bis 5, wobei die elektronische Schalteinheit (120; 220) zum bidirektionalen Stromfluss zwischen dem ersten Anschluss (122; 222) und dem zweiten Anschluss (124; 224) ausgebildet ist.

7. Steckkontaktvorrichtung (100; 200) nach einem der Ansprüche 1 bis 6, wobei die elektronische Schalteinheit (120; 220) mindestens einen Halbleiterschalter umfasst, der dazu ausgebildet ist, bei Anliegen einer elektrischen Spannung zwischen dem ersten Anschluss (122; 222) und dem zweiten Anschluss (124; 224) die Impedanz zwischen dem ersten Anschluss (122; 222) und dem zweiten Anschluss (124; 224) zu verkleinern oder den ersten Anschluss (122; 222) und den zweiten Anschluss (124; 224) elektrisch leitend zu verbinden.

8. Steckkontaktvorrichtung (100; 200) nach Anspruch 6 und 7, wobei die elektronische Schalteinheit (120; 220) eine Gleichrichterbrücke umfasst, die mit dem mindestens einen Halbleiterschalter verkettet ist.

9. Steckkontaktvorrichtung (100; 200) nach Anspruch 7 oder 8, wobei die elektronische Schalteinheit (120; 220) zwei in zueinander entgegengesetzter Richtung miteinander in Reihe geschaltete Halbleiterschalter umfasst, denen jeweils in Sperrrichtung eine Diode parallel geschaltet ist, optional wobei die elektronische Schalteinheit (120; 220) ferner einen Trigger-Schaltkreis umfasst, der dazu ausgebildet ist, bei Anliegen der elektrischen Spannung zwischen dem ersten Anschluss (122; 222) und dem zweiten Anschluss (124; 224) ein Schließen eines Halbleiterschalters zu bewirken, optional wobei der Trigger-Schaltkreises die Gleichrichterbrücke umfasst.

10. Steckkontaktvorrichtung (100; 200) nach einem der Ansprüche 1 bis 9, wobei die Steckkontaktvorrichtung (100; 200) mindestens zwei erste Steckverbinder (110; 210) und zwei zweite Steckverbinder (110; 210) mit jeweils einem HA (112; 212) und/oder einem Hl (114) und eine elektronische Schalteinheit (120; 220) umfasst, und wobei der erste Anschluss (122; 222) der elektronischen Schalteinheit (120; 220) mit der HA1 (112-1) bzw. mit dem LA1 (219) des HA (112; 212) jedes ersten Steckverbinders (110; 210) elektrisch leitend verbunden ist und der zweite Anschluss (124; 224) der elektronischen Schalteinheit (120; 220) mit der HI1 (114-1; 214) des jeweiligen ersten Steckverbinders (110; 210) elektrisch leitend verbunden ist.

11. Steckkontaktvorrichtung (100; 200) nach einem der Ansprüche 1 bis 10, wobei die mindestens zwei Steckverbinder (110; 210) ferner jeweils einen Gegenpolkontakt, GE (116; 216), mit einer ersten Kontakthälfte, GE1 (116-1; 216-1), und einer zweite Kontakthälfte, GE2 (116-2; 216-2), umfassen für einen Gegenpol der Gleichstromverbindung bezüglich des jeweiligen HA (112; 212), vorzugsweise wobei der GE (116; 216) dazu ausgebildet ist, im zusammengesteckten Zustand (T₀) des jeweiligen Steckverbinders (110; 210), im ersten Zwischenzustand (T₁; T₁') des jeweiligen Steckverbinders (110; 210) und im zweiten Zwischenzustand (T₂) des jeweiligen Steckverbinders (110; 210) die GE1 (116-1; 216-1) und die GE2 (116-2; 216-2) elektrisch leitend zu verbinden, und/oder
wobei die mindestens zwei Steckverbinder (110; 210) ferner jeweils einen Erdungskontakt, PE (118; 218), mit einer ersten Kontakthälfte, PE1 (118-1; 218-1), und einer zweiten Kontakthälfte, PE2 (118-2; 218-2), umfassen, wobei der PE (118; 218) dazu ausgebildet ist, im zusammengesteckten Zustand (T₀) des jeweiligen Steckverbinders (110; 210), im ersten Zwischenzustand (T₁; T₁') des jeweiligen Steckverbinders (110; 210) und im zweiten Zwischenzustand (T₂) des jeweiligen Steckverbinders (110; 210) die PE1 (118-1; 218-1) und die PE2 (118-2; 218-2) elektrisch leitend zu verbinden,
optional wobei der mindestens eine Steckverbinder (110; 210) jeweils eine erste Steckverbinderhälfte (110-1; 210-1) und eine zweite Steckverbinderhälfte (110-2; 210-2) umfasst, und wobei die erste Steckverbinderhälfte (110-1; 210-1) die HA1 (112-1; 212-1) des HA (112; 212) sowie die GE1 (116-1; 216-1) des GE (116; 216) und/oder die PE1 (118-1; 218-1) des PE (118; 218) umfasst und die zweite Steckverbinderhälfte (110-2; 210-2) die HA2 (112-2; 212-2) des HA (112; 212) sowie die GE2 (116-2; 216-2) des GE (116; 216) und/oder die PE2 (118-2; 218-2) des PE (118; 218) umfasst.

12. Steckkontaktvorrichtung (100; 200) nach einem der Ansprüche 1 bis 11, wobei der HA (112; 212) und/oder der Hl (114) und/oder der Weiterleitungskontakt, WL (150; 250), jeweils eine Längsachse aufweisen, und wobei die HA1 (112-1; 212-1) und die HA2 (112-2; 212-2) und/oder die HI1 (114-1) und die HI2 (114-2) und/oder die erste und zweite Kontakthälfte, WL1 (150-1; 250-1) und WL2 (150-2; 250-2), des WL (150; 250) jeweils entlang ihrer Längsachse zusammensteckbar und lösbar sind, oder wobei die HA1 (112-1; 212-1) und die HA2 (112-2; 212-2) und/oder die Kontakthälften HI1 (114-1) und HI2 (114-2) des Hilfskontakts und/oder die Kontakthälften, WL1 (150-1; 250-1) und WL2 (150-2; 250-2), des Weiterleitungskontakts, WL (150; 250), jeweils entlang einer Querachse, die quer oder senkrecht zur Längsachse ist, zusammensteckbar und lösbar sind.

13. Steckkontaktvorrichtung (100) nach Anspruch 1 und Anspruch 12, wobei eine Ausdehnung der HI2 (114-2) oder der HI1 (114-1) des Hl (114) jedes der mindestens zwei Steckverbinder (110) bezüglich einer Kontaktstelle (115) der HI1 (114-1) bzw. HI2 (114-2), die der HI2 (114-2) oder der HI1 (114-1) des jeweiligen Hl (114) zugeordnet ist, länger ist als eine Ausdehnung der HA2 (112-2) oder der HA1 (112-1) des HA (112) bezüglich einer Kontaktstelle (113) der HA1 (112-1) bzw. HA2 (112-2), die der HA2 (112-2) oder der HA1 (112-1) des jeweiligen HA (112) zugeordnet ist, wobei die jeweilige Ausdehnung entlang der Längsachse in der Richtung des Zusammensteckens im zusammengesteckten Zustand bestimmt ist,
optional wobei die HI2 (114-2) oder die HI1 (114-1) des Hl (114) des mindestens einen Steckverbinders (110) einen Trennabschnitt (117) umfasst, und wobei der Trennabschnitt (117) im zusammengesteckten Zustand (T₀) des jeweiligen Steckverbinders (110) eine galvanische Trennung von der Kontaktstelle der HI1 (114-1) oder der HI2 (114-2), die der HI2 (114-2) oder der HI1 (114-1) des Hl (114) zugeordnet ist, bewirkt,
ferner optional wobei eine Ausdehnung des Trennabschnitts (117) der HI2 (114-2) oder der HI1 (114-1) eine entlang einer Teilausdehnung der HI2 (114-2) bzw. HI1 (114-1) umlaufende Isolierung umfasst, und wobei die Teilausdehnung der HI2 (114-2) bzw. HI1 (114-1) kürzer ist als die Ausdehnung der HA2 (112-2) oder der HA1 (112-1) des HA (112) bezüglich einer Kontaktstelle (113) der HA1 (112-1) bzw. HA2 (112-2), die die HA2 (112-2) oder die HA1 (112-1) des jeweiligen HA (112) zugeordnet ist, wobei die jeweilige Ausdehnung entlang der Längsachse in der Richtung des Zusammensteckens im zusammengesteckten Zustand bestimmt ist.

14. Steckkontaktvorrichtung (200) nach Anspruch 2 und Anspruch 12, wobei der LA1 (219) und der HI1 (214) der HA1 (212-1) koaxial entlang der Längsachse angeordnet sind und wobei der HI1 (214) entlang der Längsachse in Richtung des Zusammensteckens vor dem TA1 (217) und der TA1 (217) entlang der Längsachse in Richtung des Zusammensteckens vor dem LA1 (219) der HA1 (212-1) angeordnet ist, und/oder
Steckkontaktvorrichtung (200) nach Anspruch 2 und einem der Ansprüche 3 bis 12, wobei der TA1 (217) der HA1 (212-1) eine umlaufende Isolierung umfasst.

15. Steckkontaktvorrichtung (100; 200) nach einem der Ansprüche 12 bis 14, wobei die HA1 (112-1) oder die HA2 (112-1; 212-2) des jeweiligen HA (112; 212) entlang der Längsachse nur eine Kontaktstelle (113; 213) aufweist und/oder die erste Kontakthälfte, HI1 (114-1), oder die zweite Kontakthälfte, HI2 (114-2), des jeweiligen Hilfskontakts, Hl (114), entlang der Längsachse nur eine Kontaktstelle (115) aufweist.

## Claims

1. Plug-in contact device (100) for preventing or extinguishing an arc when a DC connection is disconnected or closed by using an extension (300) of a line compound, comprising:
at least two connectors (110) at the ends of an extension (300) of a line compound, each having a main contact, HA (112), and an auxiliary contact, HI (114),
wherein the HA (112) of each of the at least two connectors (110) comprises a first contact half, HA1 (112-1), and a second contact half, HA2 (112-2), which are detachably intermateable, wherein the HA (112) is configured
- to connect the HA1 (112-1) and the HA2 (112-2) in an electrically conductive manner in a mated state (T₀) of the respective connector (110),
- to galvanically isolate the HA1 (112-1) and the HA2 (112-2) in an unmated state (T₃) of the respective connector (110),
- to connect the HA1 (112-1) and the HA2 (112-2) in an electrically conductive manner in a first intermediate state (T₁) of the respective connector (110) between the mated state (T₀) and the unmated state, and
- to galvanically isolate the HA1 (112-1) and the HA2 (112-2) in a second intermediate state (T₂) of the respective connector (110) between the first intermediate state (T₁) and the unmated state,
wherein the auxiliary contact, HI (114), of each of the at least two connectors (110) comprises a first contact half, HI1 (114-1), and a second contact half, HI2 (114-2), which are detachably intermateable, wherein the HI (114) is configured
- to galvanically isolate the HI1 (114-1) and the HI2 (114-2) in the mated state (T₀) of the respective connector,
- to galvanically isolate the HI1 (114-1) and the HI2 (114-2) in the unmated state (T₃) of the respective connector,
- to connect the HI1 (114-1) and the HI2 (114-2) in an electrically conductive manner in the first intermediate state (T₁) of the respective connector, and
- to connect the HI1 (114-1) and the HI2 (114-2) in an electrically conductive manner in the second intermediate state (T₂) of the respective connector,
and wherein
- the HA2 (112-2) and the HI2 (114-2) of the respective connector (110) are connected in an electrically conductive manner; and
- the HA2 (112-2) of a first connector (110) is connected to the HA1 (112-1) of a second connector (110) in an electrically conductive manner; and
an electronic switching unit (120), whose first terminal (122) is connected in an electrically conductive manner to the HA1 (112-1) of the first connector (110), and whose second terminal (124) is connected in an electrically conductive manner to the HI1 (114-1) of the first connector (110) and of the second connector (110), wherein the electronic switching unit (120) is configured, in response to a transition from the mated state (T₀) to the first intermediate state (T₁) of at least one of the connectors (110), to connect the first terminal (122) and the second terminal (124) in an electrically conductive manner, or to reduce an impedance between the first terminal (122) and the second terminal (124), and, in response to a transition from the first intermediate state (T₁) to the second intermediate state (T₂) of at least one of the connectors (110) and/or from the second intermediate state (T₂) to the unmated state of at least one of the connectors (110), to electrically isolate the first terminal (122) and the second terminal (124), or to increase an impedance between the first terminal (122) and the second terminal (124).

2. Plug-in contact device (200) for preventing or extinguishing an arc when a DC connection is disconnected or closed by using an extension (400) of a line compound, comprising:
at least two connectors (210) at the ends of an extension (400) of a line compound, each having a main contact, HA (212), wherein the HA (212) comprises a first contact half, HA1 (212-1), and a second contact half, HA2 (212-2), which are detachably intermateable, wherein the HA1 (212-1) comprises a load contact section, LA1 (219), an isolating section, TA1 (217), and an auxiliary contact section, HI1 (214),
wherein the HA (212) of each of the at least two connectors (210) is configured
- to connect the LA1 (219) and the HA2 (212-2) in an electrically conductive manner in a mated state (T₀) of the respective connector (210) and to galvanically isolate the HI1 (214) from the HA2 (212-2),
- to galvanically isolate the LA1 (219) and the HI1 (214) from the HA2 (212-2) in an unmated state (T₃) of the respective connector (210),
- in a first intermediate state (T₁') of the respective connector (210) between the mated state (T₀) and the unmated state (T₃), to galvanically isolate the LA1 (219) and the HA2 (212-2) and to bring at least the TA1 (217) into contact with one contact point (213) of the HA2 (212-2); and
- in a second intermediate state (T₂)of the respective connector (210) between the first intermediate state (T₁) and the unmated state (T₃), to connect the HI1 (214) to the HA2 (212-2) in an electrically conductive manner and to galvanically isolate the LA1 (219) and the HA2 (212-2),
and wherein the HA2 (212-2) of a first connector (210) is connected to the HA1 (212-1) of a second connector (210) in an electrically conductive manner; and
an electronic switching unit (220), whose first terminal (222) is connected in an electrically conductive manner to the LA1 (219) of the first connector (210), and whose second terminal (224) is connected in an electrically conductive manner to the HI1 (214) of the first connector (210) and of the second connector (210), wherein the electronic switching unit (220) is configured, in response to a transition from the mated state (T₀) to the first intermediate state (T₁'), to connect the first terminal (222) and the second terminal (224) in an electrically conductive manner, or to reduce an impedance between the first terminal (222) and the second terminal (224), and, in response to a transition from the first intermediate state (T₁') to the second intermediate state (T₂) and/or from the second intermediate state (T₂) to the unmated state (T₃), to electrically isolate the first terminal (222) and the second terminal (224), or to increase an impedance between the first terminal (222) and the second terminal (224).

3. Plug-in contact device (100; 200) according to claim 1 or 2, wherein the electronic switching unit (120; 220) is further configured, in response to a transition from the unmated state to the second intermediate state (T₂) and/or from the second intermediate state (T₂) to the first intermediate state (T₁; T₁') of one of the at least two connectors (110; 210), to connect the first terminal (122; 222) and the second terminal (124; 224) in an electrically conductive manner, or to reduce an impedance between the first terminal (122; 222) and the second terminal (124; 224), and, in response to a transition from the first intermediate state (T₁; T₁') to the mated state (T₀) of one of the at least two connectors (110; 210), to electrically isolate the first terminal (122; 222) and the second terminal (124; 224), or to increase an impedance between the first terminal (122; 222) and the second terminal (124; 224), and/or
wherein a pole of a DC power source (130; 230) of the DC connection, preferably a positive pole of the DC power source (130; 230), is connected or connectible in an electrically conductive manner to the HA1 (112-1; 212-1) or the LA1 (219) of the main contact (112; 212) of the first connector (110; 210) and/or the first terminal (122; 222) of the electronic switching unit (120; 220), and wherein a pole of an electrical consumer, preferably a positive pole of the consumer, is connected or connectible in an electrically conductive manner to the HA2 (112-2; 212-2) of the main contact (112; 212) of the second connector (110; 210) and/or the HI2 (114-2) of the auxiliary contact (114) of the second connector (110); and/or
wherein a pole of a DC power source (130; 230) of the DC connection, preferably a positive pole of the DC power source (130; 230), is connected or connectible in an electrically conductive manner to the HA2 (112-2; 212-2) of the main contact (112; 212) of the second connector (110; 210) and/or the HI2 (114-2) of the auxiliary contact (114) of the second connector (110), and wherein a pole of an electrical consumer, preferably a positive pole of the consumer, is connected or connectible in an electrically conductive manner to the HA1 (112-1; 212-1) or the LA1 (219) of the main contact (112; 212) of the first connector (110; 210) and/or the first terminal (122; 222) of the electronic switching unit (120; 220).

4. Plug-in contact device (100; 200) according to one of the claims 1 to 3, wherein at least the first connector (110; 210) comprises a relay contact, WL (150; 250), having a first contact half, WL1 (150-1; 250-1), and a second contact half, WL2 (150-2; 250-2), wherein the WL1 (150-1; 250-1) of the WL (150; 250) of the first connector (110; 210) is electrically connected to the first terminal (122; 222) of the electronic switching unit (120; 220) and/or the HI1 (114-1; 214), and the WL2 (150-2; 250-2) of the WL (150; 250) of the first connector (110; 210) is connected to the HI1 (114-1; 214) of the second connector (110; 210) in an electrically conductive manner;
optionally wherein the second connector (110; 210) comprises a relay contact, WL (150; 250), having a first contact half, WL1 (150-1; 250-1), and a second contact half, WL2 (150-2; 250-2), wherein the WL1 (150-1; 250-1) of the WL (150; 250) of the second connector (110; 210) is connected to the HI1 (114-1; 214) of the second connector (110; 210) and/or the WL2 (150-2; 250-2) of the first connector (110; 210) in an electrically conductive manner.

5. Plug-in contact device (100) according to one of the claims 1 or 4, wherein the HA1 (112-1; 212-1) of each of the at least two connectors (110; 210) comprises a male contact and the HA2 (112-2; 212-2) of each of the at least two connectors (110; 210) comprises a female contact, or wherein the HA2 (112-2; 212-2) of each of the at least two connectors (110; 210) comprises a male contact and the HA1 (112-1; 212-1) of each of the at least two connectors (110; 210) comprises a female contact; and/or
wherein the first contact half, HI1 (114-1), of the auxiliary contact of each of the at least two connectors (110) comprises a male contact and the second contact half, HI2 (114-2), of the auxiliary contact of each of the at least two connectors (110) comprises a female contact, or wherein the second contact half, HI2 (114-2), of the auxiliary contact of each of the at least two connectors (110) comprises a male contact and the first contact half, HI1 (114-1), of the auxiliary contact of each of the at least two connectors (110) comprises a female contact;
optionally in combination with claim 5, wherein the WL1 (150-1; 250-1) of the first or each of the at least two connectors (110; 210) comprises a male contact and the WL2 (150-2; 250-2) of the first or each of the at least two connectors (110; 210) comprises a female contact, or wherein the WL2 (150-2; 250-2) of the first or each of the at least two connectors (110; 210) comprises a male contact and the WL1 (150-1; 250-1) of the first or each of the at least two connectors (110; 210) comprises a female contact, or
optionally wherein an outer profile of the male contact and/or an inner profile of the female contact of the HA (112; 212) of each of the at least two connectors (110; 210) and/or an outer profile of the male contact and/or an inner profile of the female contact of the auxiliary contact, HI (114), of the respective connector (110; 210) has a round, oval or polygonal cross-section, and/or wherein the HA (112; 212) and/or the auxiliary contact, HI (114), and/or a relay contact, WL (150; 250), of the respective connector (110; 210) are hermaphroditic.

6. Plug-in contact device (100; 200) according to one of the claims 1 to 5, wherein the electronic switching unit (120; 220) is configured for bidirectional current flow between the first terminal (122; 222) and the second terminal (124; 224).

7. Plug-in contact device (100; 200) according to one of the claims 1 to 6, wherein the electronic switching unit (120; 220) comprises at least one semiconductor switch which is configured to reduce the impedance between the first terminal (122; 222) and the second terminal (124; 224), or to connect the first terminal (122; 222) and the second terminal (124; 224) in an electrically conductive manner, when an electrical voltage is applied between the first terminal (122; 222) and the second terminal (124; 224).

8. Plug-in contact device (100; 200) according to claims 6 and 7, wherein the electronic switching unit (120; 220) comprises a rectifier bridge interlinked with the at least one semiconductor switch.

9. Plug-in contact device (100; 200) according to claims 7 or 8, wherein the electronic switching unit (120; 220) comprises two semiconductor switches which are connected in opposite directions from one another in series and to each of which a diode is connected in parallel in the reverse direction, optionally wherein the electronic switching unit (120; 220) further comprises a trigger circuit which is configured to cause a semiconductor switch to close when the electrical voltage is applied between the first terminal (122; 222) and the second terminal (124; 224), optionally wherein the trigger circuit comprises the rectifier bridge.

10. Plug-in contact device (100; 200) according to one of the claims 1 to 9, wherein the plug-in contact device (100; 200) comprises at least two first connectors (110; 210) and two second connectors (110; 210) each having an HA (112; 212) and/or an HI (114) and an electronic switching unit (120; 220), and wherein the first terminal (122; 222) of the electronic switching unit (120; 220) is connected to the HA1 (112-1) or to the LA1 (219) of the HA (112; 212) of each first connector (110; 210) in an electrically conductive manner and the second terminal (124; 224) of the electronic switching unit (120; 220) is connected to the HI1 (114-1; 214) of the respective first connector (110; 210) in an electrically conductive manner.

11. Plug-in contact device (100; 200) according to one of the claims 1 to 10, wherein the at least two connectors (110; 210) further each comprise a counter pole contact, GE (116; 216), having a first contact half, GE1 (116-1; 216-1), and a second contact half, GE2 (116-2; 216-2), for a counter pole of the DC connection with respect to the respective HA (112; 212), preferably wherein the GE (116; 216) is configured to connect the GE1 (116-1; 216-1) and the GE2 (116-2; 216-2) in an electrically conductive manner in the mated state (T₀) of the respective connector (110; 210), in the first intermediate state (T₁; T₁') of the respective connector (110; 210) and in the second intermediate state (T₂) of the respective connector (110; 210), and/or
wherein the at least two connectors (110; 210) further each comprise a ground contact, PE (118; 218), having a first contact half, PE1 (118-1; 218-1), and a second contact half, PE2 (118-2; 218-2), wherein the PE (118; 218) is configured to connect the PE1 (118-1; 218-1) and the PE2 (118-2; 218-2) in an electrically conductive manner in the mated state (T₀) of the respective connector (110; 210), in the first intermediate state (T₁; T₁') of the respective connector (110; 210) and in the second intermediate state (T₂) of the respective connector (110; 210),
optionally wherein the at least one connector (110; 210) comprises a first connector half (110-1; 210-1) and a second connector half (110-2; 210-2), and wherein the first connector half (110-1; 210-1) comprises the HA1 (112-1; 212-1) of the HA (112; 212) as well as the GE1 (116-1; 216-1) of the GE (116; 216) and/or the PE1 (118-1; 218-1) of the PE (118; 218) and the second connector half (110-2; 210-2) comprises the HA2 (112-2; 212-2) of the HA (112; 212) as well as the GE2 (116-2; 216-2) of the GE (116; 216) and/or the PE2 (118-2; 218-2) of the PE (118; 218).

12. Plug-in contact device (100; 200) according to one of the claims 1 to 11, wherein the HA (112; 212) and/or the HI (114) and/or the relay contact, WL (150; 250), each have a longitudinal axis, and wherein the HA1 (112-1; 212-1) and the HA2 (112-2; 212-2) and/or the HI1 (114-1) and the HI2 (114-2) and/or the first and second contact halves, WL1 (150-1; 250-1) and WL2 (150-2; 250-2), of the WL (150; 250) are each intermateable and detachable along their longitudinal axis, or wherein the HA1 (112-1; 212-1) and the HA2 (112-2; 212-2) and/or the contact halves HI1 (114-1) and HI2 (114-2) of the auxiliary contact and/or the contact halves, WL1 (150-1; 250-1) and WL2 (150-2; 250-2), of the relay contact, WL (150; 250), are each intermateable and detachable along a transverse axis that is transverse or perpendicular to the longitudinal axis.

13. Plug-in contact device (100) according to claim 1 and claim 12, wherein an extension of the HI2 (114-2) or the HI1 (114-1) of the HI (114) of each of the at least two connectors (110) with respect to a contact point (115) of the HI1 (114-1) or the HI2 (114-2) respectively, which is associated with the HI2 (114-2) or the HI1 (114-1) of the respective HI (114), is longer than an extension of the HA2 (112-2) or the HA1 (112-1) of the HA (112) with respect to a contact point (113) of the HA1 (112-1) or the HA2 (112-2), which is associated with the HA2 (112-2) or the HA1 (112-1) of the respective HA (112), wherein the respective extension along the longitudinal axis is determined in the direction of mating in the mated state,
optionally wherein the HI2 (114-2) or the HI1 (114-1) of the HI (114) of the at least one connector (110) comprises an isolating section (117), and wherein the isolating section (117), in the mated state (T₀) of the respective connector (110), causes galvanic isolation from the contact point of the HI1 (114-1) or the HI2 (114-2) associated with the HI2 (114-2) or the HI1 (114-1) of the HI (114),
further optionally wherein an extension of the isolating section (117) of the HI2 (114-2) or the HI1 (114-1) comprises circumferential insulation running along a partial extension of the HI2 (114-2) or the HI1 (114-1), and wherein the partial extension of the HI2 (114-2) or the HI1 (114-1) is shorter than the extension of the HA2 (112-2) or the HA1 (112-1) of the HA (112) with respect to a contact point (113) of the HA1 (112-1) or HA2 (112-2), which is associated with the HA2 (112-2) or the HA1 (112-1) of the respective HA (112), wherein the respective extension along the longitudinal axis is determined in the direction of mating in the mated state.

14. Plug-in contact device (200) according to claim 2 and claim 12, wherein the LA1 (219) and the HI1 (214) of the HA1 (212-1) are arranged coaxially along the longitudinal axis, and wherein the HI1 (214) is arranged along the longitudinal axis in the direction of mating in front of the TA1 (217), and the TA1 (217) is arranged along the longitudinal axis in the direction of mating in front of the LA1 (219) of the HA1 (212-1) and/or
Plug-in contact device (200) according to claim 2 and one of the claims 3 to 12, wherein the TA1 (217) of the HA1 (212-1) comprises circumferential insulation.

15. Plug-in contact device (100; 200) according to one of the claims 12 to 14, wherein the HA1 (112-1) or the HA2 (112-1; 212-2) of the respective HA (112; 212) has only one contact point (113; 213) along the longitudinal axis and/or the first contact half, HI1 (114-1), or the second contact half, HI2 (114-2), of the respective auxiliary contact, HI (114), has only one contact point (115) along the longitudinal axis.

## Revendications

1. Dispositif de contact enfichable (100) pour éviter ou éteindre un arc électrique lors de la déconnexion ou de la fermeture d'une connexion à courant continu en utilisant une extension (300) d'un réseau de lignes, comprenant:
au moins deux connecteurs (110) aux extrémités d'une extension (300) d'un ensemble de lignes avec respectivement un contact principal, HA (112), et un contact auxiliaire, Hl (114),
dans lequel le HA (112) de chacun des au moins deux connecteurs (110) comprend une première moitié de contact, HA1 (112-1), et une seconde moitié de contact, HA2 (112-2), qui peuvent être connectées ensemble de manière détachable, le HA (112) étant adapté pour cela,
- dans un état enfiché (T₀) du connecteur respectif (110), à relier de manière électriquement conductrice les HA1 (112-1) et HA2 (112-2),
- dans un état détaché (T₃) du connecteur respectif (110), à séparer galvaniquement la HA1 (112-1) et la HA2 (112-2),
- dans un premier état intermédiaire (T₁) du connecteur respectif (110) entre l'état enfiché (T₀) et l'état détaché, à relier de manière électriquement conductrice les HA1 (112-1) et HA2 (112-2) et
- dans un deuxième état intermédiaire (T₂) du connecteur respectif (110), entre le premier état intermédiaire (T₁) et l'état détaché, à séparer galvaniquement les HA1 (112-1) et HA2 (112-2),
dans lequel le contact auxiliaire, Hl (114), de chacun des au moins deux connecteurs (110) comprend une première moitié de contact, HI1 (114-1), et une seconde moitié de contact, HI2 (114-2), qui peuvent être connectées ensemble de manière amovible, le Hl (114) étant conçu pour cela,
- à l'état enfiché (T₀) du connecteur respectif, de séparer galvaniquement les HI1 (114-1) et HI2 (114-2),
- à l'état détaché (T₃) du connecteur respectif, de séparer galvaniquement les HI1 (114-1) et HI2 (114-2),
- dans le premier état intermédiaire (T₁) du connecteur respectif, à relier de manière électriquement conductrice les HI1 (114-1) et HI2 (114-2), et
- dans le deuxième état intermédiaire (T₂) du connecteur respectif, à relier de manière électriquement conductrice les HI1 (114-1) et HI2 (114-2),
et où
- la HA2 (112-2) et la HI2 (114-2) du connecteur respectif (110) sont reliés de manière électriquement conductrice; et
- la HA2 (112-2) d'un premier connecteur (110) est reliée de manière électriquement conductrice à la HA1 (112-1) d'un deuxième connecteur (110); et
une unité de commutation électronique (120) dont la première borne (122) est reliée de manière électriquement conductrice à la HA1 (112-1) du premier connecteur enfichable (110) et dont la deuxième borne (124) est reliée de manière électriquement conductrice à la HI1 (114-1) du premier connecteur enfichable (110) et du deuxième connecteur enfichable (110), l'unité de commutation électronique (120) étant conçue pour cela, en réaction à une transition de l'état enfiché (T₀) au premier état intermédiaire (T₁) d'au moins l'un des connecteurs (110), à relier de manière électriquement conductrice la première borne (122) et la deuxième borne (124) ou à réduire une impédance entre la première borne (122) et la deuxième borne (124), et, en réponse à une transition du premier état intermédiaire (T₁) au deuxième état intermédiaire (T₂) d'au moins un des connecteurs (110) et/ou du deuxième état intermédiaire (T₂) à l'état déconnecté d'au moins un des connecteurs (110), à déconnecter électriquement la première borne (122) et la deuxième borne (124) ou à augmenter une impédance entre la première borne (122) et la deuxième borne (124).

2. Dispositif de contact enfichable (200) pour éviter ou éteindre un arc électrique lors de la déconnexion ou de la fermeture d'une connexion à courant continu en utilisant une extension (400) d'un réseau de lignes, comprenant:
au moins deux connecteurs (210) aux extrémités d'une extension (400) d'un réseau de lignes, chacun ayant un contact principal, HA (212), le HA (212) comprenant chacun une première moitié de contact, HA1 (212-1), et une seconde moitié de contact, HA2 (212-2), qui peuvent être connectées ensemble de manière amovible, la HA1 (212-1) comprenant une partie de contact de charge, LA1 (219), une partie de séparation, TA1 (217), et une partie de contact auxiliaire, HI1 (214),
dans lequel le HA (212) de chacun des au moins deux connecteurs (210) est adapté à cet effet,
- dans un état enfiché (T₀) du connecteur respectif (210), à relier de manière électriquement conductrice le LA1 (219) et la HA2 (212-2) et à séparer galvaniquement la HI1 (214) de la HA2 (212-2),
- dans un état détaché (T₃) du connecteur respectif (210), à séparer galvaniquement la LA1 (219) et la HI1 (214) de la HA2 (212-2),
- dans un premier état intermédiaire (T₁') du connecteur respectif (210) entre l'état assemblé (T₀) et l'état détaché (T₃), à séparer galvaniquement les LA1 (219) et HA2 (212-2) et à mettre au moins la TA1 (217) en contact avec un point de contact (213) de la HA2 (212-2); et
- dans un deuxième état intermédiaire (T₂) du connecteur respectif (210) entre le premier état intermédiaire (T₁) et l'état détaché (T₃), à relier de manière électriquement conductrice la HI1 (214) à la HA2 (212-2) et à séparer galvaniquement les LA1 (219) et HA2 (212-2),
et dans lequel la HA2 (212-2) d'un premier connecteur (210) est reliée de manière électriquement conductrice à la HA1 (212-1) d'un deuxième connecteur (210); et
une unité de commutation électronique (220) dont la première borne (222) est reliée de manière électriquement conductrice à la LA1 (219) du premier connecteur enfichable (210) et dont la deuxième borne (224) est reliée de manière électriquement conductrice au HI1 (214) du premier connecteur enfichable (210) et du deuxième connecteur enfichable (210), l'unité de commutation électronique (220) étant conçue à cet effet, en réaction à une transition de l'état enfiché (T₀) au premier état intermédiaire (T₁ '), à relier de manière électriquement conductrice la première borne (222) et la deuxième borne (224) ou à réduire une impédance entre la première borne (222) et la deuxième borne (224), et, en réponse à une transition du premier état intermédiaire (T₁ ') au deuxième état intermédiaire (T₂) et/ou du deuxième état intermédiaire (T₂) à l'état dissous (T₃), à séparer électriquement la première borne (222) et la deuxième borne (224) ou à augmenter une impédance entre la première borne (222) et la deuxième borne (224).

3. Dispositif de contact enfichable (100; 200) selon la revendication 1 ou 2, dans lequel l'unité de commutation électronique (120; 220) est en outre conçue pour, en réaction à un passage de l'état détaché au deuxième état intermédiaire (T₂) et/ou du deuxième état intermédiaire (T₂) au premier état intermédiaire (T₁; T₁ ') de l'un des au moins deux connecteurs enfichables (110; 210), relier de manière électriquement conductrice la première borne (122; 222) et la deuxième borne (124; 224) ou réduire une impédance entre la première borne (122; 222) et la deuxième borne (124; 224), et en réaction à une transition du premier état intermédiaire (T₁; T₁ ') à l'état enfiché (T₀) de l'un des au moins deux connecteurs (110; 210), à séparer électriquement la première borne (122; 222) et la deuxième borne (124; 224) ou à augmenter une impédance entre la première borne (122; 222) et la deuxième borne (124; 224), et/ou
dans lequel un pôle d'une source de courant continu (130; 230) de la connexion de courant continu, de préférence un pôle positif de la source de courant continu (130; 230), est relié à la borne HA1 (112-1; 212-1) ou le LA1 (219) du contact principal (112; 212) du premier connecteur (110; 210) et/ou la première connexion (122; 222) de l'unité de commutation électronique (120; 220), et dans lequel un pôle d'un consommateur électrique, de préférence un pôle positif du consommateur, est relié ou peut être relié de manière électriquement conductrice à la borne HA2 (112-2; 212-2) du contact principal (112; 212) du deuxième connecteur (110; 210) et/ou le HI2 (114-2) du contact auxiliaire (114) du deuxième connecteur (110) est relié ou peut être relié de manière électriquement conductrice; et/ou
dans lequel un pôle d'une source de courant continu (130; 230) de la connexion de courant continu, de préférence un pôle positif de la source de courant continu (130; 230), est relié à la borne HA2 (112-2; 212-2) du contact principal (112; 212) du deuxième connecteur (110; 210) et/ou la HI2 (114-2) du contact auxiliaire (114) du deuxième connecteur (110), et où un pôle d'un consommateur électrique, de préférence un pôle positif du consommateur, est relié ou peut être relié de manière électriquement conductrice à la HA1 (112-1; 212-1) ou à la LA1 (219) du contact principal (112; 212) du premier connecteur (110; 210) et/ou la première connexion (122; 222) de l'unité de commutation électronique (120; 220).

4. Dispositif de contact enfichable (100; 200) selon l'une des revendications 1 à 3, dans lequel au moins le premier connecteur (110; 210) comprend un contact de retransmission, WL (150; 250), avec une première moitié de contact, WL1 (150-1; 250-1), et une deuxième moitié de contact, WL2 (150-2; 250-2), la WL1 (150-1; 250-1) du WL (150; 250) du premier connecteur (110; 210) est reliée électriquement à la première borne (122; 222) de l'unité de commutation électronique (120; 220) et/ou à la HI1 (114-1; 214) et la WL2 (150-2; 250-2) de la WL (150; 250) du premier connecteur (110; 210) est reliée de manière électriquement conductrice à la HI1 (114-1; 214) du deuxième connecteur (110; 210);
en option, le second connecteur (110; 210) comprenant un contact de retransmission, WL (150; 250), avec une première moitié de contact, WL1 (150-1; 250-1), et une seconde moitié de contact, WL2 (150-2; 250-2), les WL1 (150-1; 250-1) de la WL (150; 250) du deuxième connecteur (110; 210) est reliée de manière électriquement conductrice à la HI1 (114-1; 214) du deuxième connecteur (110; 210) et/ou à la WL2 (150-2; 250-2) du premier connecteur (110; 210).

5. Dispositif de contact enfichable (100) selon l'une des revendications 1 ou 4, dans lequel la HA1 (112-1; 212-1) de chacun des au moins deux connecteurs mâles (110; 210) comprend un contact mâle et la HA2 (112-2; 212-2) de chacun des au moins deux connecteurs mâles (110; 210) comprend un contact femelle, ou dans lequel la HA2 (112-2; 212-2) de chacun des au moins deux connecteurs mâles (110; 210) comprend un contact mâle et la HA1 (112-1; 212-1) de chacun des au moins deux connecteurs mâles (110; 210) comprend un contact femelle; et/ou
dans lequel la première moitié de contact, HI1 (114-1), du contact auxiliaire de chacun des au moins deux connecteurs (110) comprend un contact mâle et la seconde moitié de contact, HI2 (114-2), du contact auxiliaire de chacun des au moins deux connecteurs (110) comprend un contact femelle, ou dans lequel la seconde moitié de contact, HI2 (114-2), du contact auxiliaire de chacun des au moins deux connecteurs (110) comprend un contact mâle et la première moitié de contact, HI1 (114-1), du contact auxiliaire de chacun des au moins deux connecteurs (110) comprend un contact femelle;
optionnellement en combinaison avec la revendication 5, dans laquelle la WL1 (150-1; 250-1) du premier ou de chacun des au moins deux connecteurs (110; 210) comprend un contact mâle et la WL2 (150-2; 250-2) du premier ou de chacun des au moins deux connecteurs (110; 210) comprend un contact femelle, ou dans lequel la WL2 (150-2; 250-2) du premier ou de chacun des au moins deux connecteurs (110; 210) comprend un contact mâle et la WL1 (150-1; 250-1) du premier ou de chacun des au moins deux connecteurs (110; 210) comprend un contact femelle, ou
éventuellement dans lequel un profil extérieur du contact mâle et/ou un profil intérieur du contact femelle du HA (112; 212) de chacun des au moins deux connecteurs (110; 210) et/ou un profil extérieur du contact mâle et/ou un profil intérieur du contact femelle du contact auxiliaire, HI (114), du connecteur respectif (110; 210) présente une section transversale ronde, ovale ou polygonale, et/ou dans lequel le HA (112; 212) et/ou le contact auxiliaire, HI (114), et/ou un contact de retransmission, WL (150; 250), du connecteur respectif (110; 210) sont hermaphrodites.

6. Dispositif de contact enfichable (100; 200) selon l'une quelconque des revendications 1 à 5, dans lequel l'unité de commutation électronique (120; 220) est configurée pour faire circuler un courant bidirectionnel entre la première borne (122; 222) et la deuxième borne (124; 224).

7. Dispositif de contact enfichable (100; 200) selon l'une des revendications 1 à 6, dans lequel l'unité de commutation électronique (120; 220) comprend au moins un commutateur à semi-conducteur qui est conçu pour, en cas d'application d'une tension électrique entre la première borne (122; 222) et la deuxième borne (124; 224), réduire l'impédance entre la première borne (122; 222) et la deuxième borne (124; 224) ou relier la première borne (122; 222) et la deuxième borne (124; 224) de manière électriquement conductrice.

8. Dispositif de contact enfichable (100; 200) selon les revendications 6 et 7, dans lequel l'unité de commutation électronique (120; 220) comprend un pont redresseur concaténé avec ledit au moins un commutateur à semi-conducteur.

9. Dispositif de contact enfichable (100; 200) selon la revendication 7 ou 8, dans lequel l'unité de commutation électronique (120; 220) comprend deux commutateurs à semi-conducteurs montés en série l'un avec l'autre dans des directions opposées l'une à l'autre, à chacun desquels une diode est montée en parallèle dans la direction de blocage, optionnellement dans lequel l'unité de commutation électronique (120; 220) comprend en outre un circuit de déclenchement qui est conçu pour provoquer la fermeture d'un commutateur à semi-conducteur en cas d'application de la tension électrique entre la première borne (122; 222) et la deuxième borne (124; 224), le circuit de déclenchement comprenant en option le pont redresseur.

10. Dispositif de contact enfichable (100; 200) selon l'une des revendications 1 à 9, dans lequel le dispositif de contact enfichable (100; 200) comprend au moins deux premiers connecteurs enfichables (110; 210) et deux deuxièmes connecteurs enfichables (110; 210) avec chacun un HA (112; 212) et/ou un HI (114) et une unité de commutation électronique (120; 220), et dans lequel la première connexion (122; 222) de l'unité de commutation électronique (120; 220) est reliée à la HA1 (112-1) ou au LA1 (114), respectivement, de manière électriquement conductrice à la LA1 (219) du HA (112; 212) de chaque premier connecteur (110; 210) et la deuxième borne (124; 224) de l'unité de commutation électronique (120; 220) est reliée de manière électriquement conductrice à la HI1 (114-1; 214) du premier connecteur respectif (110; 210).

11. Dispositif de contact enfichable (100; 200) selon l'une quelconque des revendications 1 à 10, dans lequel lesdits au moins deux connecteurs (110; 210) comprennent en outre chacun un contact de pôle opposé, GE (116; 216), comportant une première moitié de contact, GE1 (116-1; 216-1), et une seconde moitié de contact, GE2 (116-2; 216-2), pour un pôle opposé de la connexion en courant continu par rapport au HA respectif (112; 212), de préférence la GE (116; 216) étant conçue pour relier de manière électriquement conductrice la GE1 (116-1; 216-1) et la GE2 (116-2; 216-2) à l'état enfiché (T₀) du connecteur respectif (110; 210), au premier état intermédiaire (T₁; T₁') du connecteur respectif (110; 210) et au deuxième état intermédiaire (T₂) du connecteur respectif (110; 210), et/ou
les au moins deux connecteurs (110; 210) comprenant en outre chacun un contact de mise à la terre, PE (118; 218), avec une première moitié de contact, PE1 (118-1; 218-1), et une deuxième moitié de contact, PE2 (118-2; 218-2), le PE (118; 218) étant conçu pour, dans l'état enfiché (T₀) du connecteur respectif (110; 210), dans le premier état intermédiaire (T₁; T₁') du connecteur respectif (110; 210) et dans le deuxième état intermédiaire (T₂) du connecteur respectif (110; 210), à relier de manière électriquement conductrice les PE1 (118-1; 218-1) et les PE2 (118-2; 218-2),
éventuellement dans lequel ledit au moins un connecteur (110; 210) -comprend respectivement une première moitié de connecteur (110-1; 210-1) et une seconde moitié de connecteur (110-2; 210-2), et dans lequel la première moitié de connecteur (110-1; 210-1) comprend la HA1 (112-1; 212-1) du HA (112; 212) ainsi que le GE1 (116-1; 216-1) du GE (116; 216) et/ou le PE1 (118-1; 218-1) du PE (118; 218) et la deuxième moitié de connecteur (110-2; 210-2) comprend la HA2 (112-2; 212-2) du HA (112; 212) ainsi que le GE2 (116-2; 216-2) du GE (116; 216) et/ou le PE2 (118-2; 218-2) du PE (118; 218).

12. Dispositif de contact enfichable (100; 200) selon l'une des revendications 1 à 11, dans lequel le HA (112; 212) et/ou le HI (114) et/ou le contact de retransmission, WL (150; 250), présentent chacun un axe longitudinal, et dans lequel la HA1 (112-1; 212-1) et la HA2 (112-2; 212-2) et/ou le HI1 (114-1) et le HI2 (114-2) et/ou les première et deuxième moitiés de contact, WL1 (150-1; 250-1) et WL2 (150-2; 250-2), du WL (150; 250) sont respectivement enfichables et détachables le long de leur axe longitudinal, ou dans lequel les HA1 (112-1; 212-1) et les HA2 (112-2; 212-2) et/ou les moitiés de contact HI1 (114-1) et HI2 (114-2) du contact auxiliaire et/ou les moitiés de contact, WL1 (150-1; 250-1) et WL2 (150-2; 250-2), du contact de retransmission, WL (150; 250), peuvent être assemblés et détachés respectivement le long d'un axe transversal, qui est transversal ou perpendiculaire à l'axe longitudinal.

13. Dispositif de contact enfichable (100) selon la revendication 1 et la revendication 12, dans lequel une extension de la HI2 (114-2) ou de la HI1 (114-1) du HI (114) de chacun des au moins deux connecteurs mâles (110) par rapport à un point de contact (115) de la HI1 (114-1) ou de la HI2 (114-2), respectivement, associé au HI2 (114-2) ou au HI1 (114-1) du HI (114) respectif, est plus longue qu'une extension de la HA2 (112-2) ou de la HA1 (112-1) du HA (112) par rapport à un point de contact (113) de la HA1 (112-1) ou de la HA2 (112-2), respectivement, associé au HA2 (112-2) ou au HA1 (112-1) du HA (112) respectif, l'extension respective étant déterminée le long de l'axe longitudinal dans la direction de l'emboîtement à l'état emboîté,
optionnellement dans lequel le HI2 (114-2) ou le HI1 (114-1) du HI (114) du au moins un connecteur (110) comprend une section de séparation (117), et dans lequel la section de séparation (117), dans l'état enfiché (T₀) du connecteur respectif (110), réalise une séparation galvanique du point de contact de la HI1 (114-1) ou de la HI2 (114-2) associé à la HI2 (114-2) ou à la HI1 (114-1) du HI (114),
en outre, facultativement, dans lequel une extension de la section de séparation (117) de la HI2 (114-2) ou de la HI1 (114-1) comprend une isolation périphérique le long d'une extension partielle de la HI2 (114-2) ou de la HI1 (114-1), respectivement, et dans lequel l'extension partielle de la HI2 (114-2) ou de la HI1 (114-1) est plus courte que l'extension de la HA2 (112-2) ou de la HA1 (112-1) du HA (112) par rapport à un point de contact (113) de la HA1 (112-1) ou de la HA2 (112-2), respectivement, auquel est associé la HA2 (112-2) ou la HA1 (112-1) du HA (112) respectif, l'extension respective le long de l'axe longitudinal étant déterminée dans la direction de l'emboîtement à l'état emboîté.

14. Dispositif de contact enfichable (200) selon la revendication 2 et la revendication 12, dans lequel le LA1 (219) et le HI1 (214) de la HA1 (212-1) sont disposés coaxialement le long de l'axe longitudinal, et dans lequel le HI1 (214) est disposé le long de l'axe longitudinal dans la direction de l'accouplement avant la TA1 (217) et la TA1 (217) est disposé le long de l'axe longitudinal dans la direction de l'accouplement avant le LA1 (219) de la HA1 (212-1), et/ou
dispositif de contact enfichable (200) selon la revendication 2 et l'une des revendications 3 à 12, dans lequel la TA1 (217) de la HA1 (212-1) comprend une isolation périphérique.

15. Dispositif de contact enfichable (100; 200) selon l'une des revendications 12 à 14, dans lequel la HA1 (112-1) ou la HA2 (112-1; 212-2) du HA respectif (112; 212) ne comporte qu'un seul point de contact (113; 213) le long de l'axe longitudinal et/ou la première moitié de contact, HI1 (114-1), ou la deuxième moitié de contact, HI2 (114-2), du contact auxiliaire respectif, HI (114), ne comporte qu'un seul point de contact (115) le long de l'axe longitudinal.
